# EUROPEAN PATENT SPECIFICATION

(11) **EP 4 054 130 B1**
(45) Date of publication and mention of the grant of the patent: **21.05.2025**
(21) Application number: 20893893.6
(22) Date of filing: 27.11.2020
(51) Int. Cl.: H04L 12/46, H04W 76/10

(54) **COMMUNICATION METHOD, APPARATUS AND SYSTEM**
KOMMUNIKATIONSVERFAHREN, -VORRICHTUNG UND -SYSTEM
PROCÉDÉ, APPAREIL ET SYSTÈME DE COMMUNICATION

(30) Priority: 29.11.2019 CN 201911206495
(43) Date of publication of application: 07.09.2022
(73) Proprietor: Huawei Technologies Co., Ltd., Shenzhen, Guangdong 518129 (CN)
(72) Inventor: YAO, Qi, Shenzhen, Guangdong 518129 (CN)
(74) Representative: Pfenning, Meinig & Partner mbB
(86) International application number: PCT/CN2020/132414
(87) International publication number: WO 2021/104484

(56) References cited:
- CN-A- 109 246 767
- CN-A- 110 247 779
- CN-A- 110 278 584
- ANONYMOUS: "3rd Generation Partnership Project; Technical Specification Group Services and System Aspects; System Architecture for the 5G System (5GS); Stage 2 (Release 16)", vol. SA WG2, no. V16.2.0, 24 September 2019 (2019-09-24), pages 1 - 391, XP051784669, Retrieved from the Internet <URL:ftp://ftp.3gpp.org/Specs/archive/23_series/23.501/23501-g20.zip 23501-g20.doc> [retrieved on 20190924]
- ANONYMOUS: "3rd Generation Partnership Project; Technical Specification Group Services and System Aspects; Study on enhancement of 5G System (5GS) for vertical and Local Area Network (LAN) services (Release 16)", 3GPP STANDARD; TECHNICAL REPORT; 3GPP TR 23.734, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V16.2.0, 11 June 2019 (2019-06-11), pages 1 - 117, XP051753966
- HUAWEI, HISILICON: "Procedures for support of 5G VN group communication, S2-1908975", 3GPP DRAFT; S2-1908975 TS23.502 CR1706 PROCEDURES FOR SUPPORT OF 5G VN GROUP COMMUNICATION_FINAL, vol. SA WG2, 4 October 2019 (2019-10-04), Split, Croatia, pages 1 - 20, XP051795105
- HUAWEI ET AL.: "Procedures for support of 5G VN group communication, S2-1907698", 3GPP TSG-SA2 MEETING #135, 28 June 2019 (2019-06-28), XP051752665
- HUAWEI, HISILICON: "Multicast forwarding for Ethernet type PDU Session, S2-1908925", 3GPP DRAFT; S2-1908925 TS23.501 MULTICAST FORWARDING FOR ETHERN..., vol. SA WG2, 4 October 2019 (2019-10-04), Split, Croatia, pages 1 - 4, XP051795055

## Description

### TECHNICAL FIELD

This application relates to the field of communication technologies, and in particular, to a communication method, apparatus, and computer-readable storage medium.

### BACKGROUND

In a fifth generation (5th-generation, 5G) virtual network (5G virtual network, 5GVN), one session management function (session management function, SMF) network element (the SMF network element is referred to as an SMF for short below) may simultaneously manage a plurality of user plane function (user plane function, UPF) network elements (the UPF network element is referred to as a UPF for short below). Each UPF maintains forwarding information (for example, address information of a terminal) of terminals served by all other UPFs. An N19 tunnel needs to be established between every two UPFs, and data between terminals served by different UPFs is transmitted through the N19 tunnel between different UPFs. If there are many UPFs, a large quantity of N19 tunnels need to be established.
ANNONYMOUS: "3rd Generation Partnership Project; Technical Specification Group Servicesand System Aspects; System Architecture for the 5G System (5GS); Stage 2 (Release 16)", 3GPP STANDARD; Technical Specification; 3GPP TS 23.501, 3RD GENERATION PARTNERSHIP PROJECT (3GPP), MOBILE COMPETENCE CENTER; 650, ROUTE DES LUCIOLES; F-06921 SOPHIA-ANTIPOLIS CEDEX; FRANCE, vol. SA WG2, no. V16.2.0 24 September 2019 (2019-09-24), pages 1-391, discloses the Stage 2 system architecture for the 5G System. Tue 5G System provides data connectivity and services.
ANNONYMOUS: "3rd Generation Partnership Project; Technical Specification Group Services and System Aspects; Study on enhancement of 5G System (5GS) for vertical and Local Area Network (LAN) services (Release 16)", 3GPP STANDARD; Technical Specification; 3GPP TR 23.734, 3RD GENERATION PARTNERSHIP PROJECT (3GPP), MOBILE COMPETENCE CENTER; 650, ROUTE DES LUCIOLES; F-06921 SOPHIA-ANTIPOLIS CEDEX; FRANCE, vol. SA WG2, no. V16.2.0 11 June 2019 (2019-06-11), pages 1-117, discloses enhancements to 5GS that are required to fulfil Stage-1 service requirements in vertical domains.

### SUMMARY

The invention is defined by the independent claims. Preferable embodiments are defined by the dependent claims.

Embodiments of this application provide a communication method, apparatus, and system, to reduce a quantity of N19 tunnels in a 5GVN, and reduce network complexity.

To achieve the foregoing objective, embodiments of this application provide the following technical solutions.

According to a first aspect, a communication system is provided, including a session management network element that provides a 5GVN service for a group, a user plane network element that provides the 5GVN service for the group, and a transit device that provides the 5GVN service for the group. The session management network element is configured to: in a process of creating a session for a terminal in the group, send a first forwarding rule to the transit device, send a second forwarding rule to the user plane network element and send a fourth forwarding rule to the user plane network element, where the first forwarding rule is used by the transit device to forward, to a user plane network element, a data packet whose destination address is an address of a terminal served by the user plane network element, the second forwarding rule sent to the user plane network element is used by the user plane network element to forward, to the transit device, a data packet whose destination address is not an address of a terminal served by the user plane network element, and the fourth forwarding rule sent to the user plane network element is used by the user plane network element to forward a data packet whose destination address is an address of a terminal served by the user plane network element to a radio access network, RAN, node accessed by the terminal served by the user plane network element. The transit device is configured to: receive the first forwarding rule, install the first forwarding rule and to forward data between any two user plane network elements that provide the 5GVN service for the group. The user plane network element is configured to: receive the second forwarding rule and install the second forwarding rule. According to the communication system provided in the first aspect, the SMF may determine the transit device in a 5GVN, and send forwarding information of the UPF and forwarding information of a terminal to the transit device. A star topology architecture is used in 5GVN networking. In this way, the transit device correctly forwards, to the UPF that serves the terminal, the received data packet sent to the terminal. Forwarding data between two UPFs by the transit device can reduce a quantity of N19 tunnels and decrease complexity of forwarding information synchronization.

In a possible implementation, the transit device is determined by the session management network element for the group when a quantity of user plane network elements that provide the 5GVN service for the group reaches N. The session management network element is specifically configured to send the second forwarding rule to the user plane network element after determining the transit device for the group. The user plane network element is specifically configured to: receive the second forwarding rule and update a forwarding rule in the user plane network element to the second forwarding rule.

In a possible implementation, the first forwarding rule includes forwarding information of at least one user plane network element and forwarding information of at least one terminal served by the at least one user plane network element.

In a possible implementation, the second forwarding rule includes forwarding information of the transit device.

According to a second aspect, a communication method is provided, and includes: A session management network element determines, in a process of creating a session for a terminal in a group, a transit device that provides a fifth generation virtual network 5GVN service for the group, where the transit device is configured to forward data between any two user plane network elements that provide the 5GVN service for the group. The session management network element sends a first forwarding rule to the transit device, where the first forwarding rule includes forwarding information of at least one user plane network element and forwarding information of at least one terminal served by the at least one user plane network element, the first forwarding rule is used by the transit device to forward, to the user plane network element that serves a first terminal, a data packet whose destination address is an address of the first terminal, and the first terminal is any one of the at least one terminal. According to the method provided in the second aspect, the SMF may determine the transit device in a 5GVN, and send the forwarding information of the UPF and the forwarding information of a terminal to the transit device. The method further comprises: sending, by the session management network element, a second forwarding rule to the first user plane network element, wherein the second forwarding rule comprises forwarding information of the transit device, and the second forwarding rule is used by the first user plane network element to forward, to the transit device, a data packet whose destination address is not an address of a terminal served by the first user plane network element, and sending, by the session management network element, a fourth forwarding rule to the first user plane network element, wherein the fourth forwarding rule is used by the first user plane network element to forward a data packet whose destination address is an address of a terminal served by the first user plane network element to a radio access network, RAN, node accessed by the terminal served by the first user plane network element. A star topology architecture is used in 5GVN networking. In this way, the transit device correctly forwards, to the UPF that serves the terminal, the received data packet sent to the terminal. Forwarding data between two UPFs by the transit device can reduce a quantity of N19 tunnels and decrease complexity of forwarding information synchronization.

In a possible implementation, the transit device is a user plane network element, and the first forwarding rule is an N4 rule.

In a possible implementation, that a session management network element determines a transit device that provides a 5GVN service for the group includes: The session management network element obtains, from another network element, information about the transit device that provides the 5GVN service for the group. The session management network element determines the transit device based on the obtained information about the transit device.

In a possible implementation, that a session management network element determines, in a process of creating a session for a terminal in a group, a transit device that provides a 5GVN service for the group includes: The session management network element receives, for a first time, a session establishment request sent by the terminal in the group, where the session establishment request is used to request to establish a session to access the 5GVN service. The session management network element determines the transit device that provides the 5GVN service for the group. In the possible implementation, a star topology architecture may be used in 5GVN networking, to avoid establishing a plurality of N19 tunnels in the 5GVN.

In a possible implementation, if the session establishment request received by the session management network element for the first time is sent by a second terminal in the group, the method further includes: The session management network element selects a first user plane network element for a session of the second terminal, where if the transit device and the first user plane network element are two different devices, the first forwarding rule includes forwarding information of the first user plane network element and forwarding information of the second terminal.

In a possible implementation, the method further includes: The session management network element sends a second forwarding rule to the first user plane network element, where the second forwarding rule includes forwarding information of the transit device, and the second forwarding rule is used by the first user plane network element to forward, to the transit device, a data packet whose destination address is not an address of a terminal served by the first user plane network element.

In a possible implementation, that a session management network element determines, in a process of creating a session for a terminal in a group, a transit device that provides a 5GVN service for the group includes: The session management network element receives a session establishment request sent by a third terminal in the group, where the session establishment request is used to request to establish a session to access the 5GVN service. The session management network element selects a second user plane network element for a session of the third terminal. The session management network element determines whether a quantity of user plane network elements that provide the 5GVN service for the group reaches N, where N is an integer greater than 1. If the quantity reaches N, the session management network element determines the transit device that provides the 5GVN service for the group. In the possible implementation, a star topology architecture may be used when the quantity of UPFs in the 5GVN is large, to avoid establishing a plurality of N19 tunnels in the 5GVN.

In the possible implementation, the transit device is one of N user plane network elements that provide the 5GVN service for the group, the first forwarding rule includes forwarding information of N-1 user plane network elements and forwarding information of terminals served by the N-1 user plane network elements, and the N-1 user plane network elements are user plane network elements other than the transit device in the N user plane network elements that provide the 5GVN service for the group.

In a possible implementation, the method further includes: The session management network element sends an update request to the N-1 user plane network elements, where the update request is used to request a corresponding user plane network element to update a forwarding rule. An update request sent to a user plane network element includes a second forwarding rule, the second forwarding rule includes forwarding information of the transit device, and the second forwarding rule is used by the user plane network element to forward, to the transit device, a data packet whose destination address is not an address of a terminal served by the user plane network element.

In a possible implementation, the transit device is a device other than N user plane network elements that provide the 5GVN service for the group, and the first forwarding rule includes forwarding information of the N user plane network elements and forwarding information of terminals served by the N user plane network elements.

In a possible implementation, the method further includes: The session management network element sends an update request to each of the N user plane network elements, where the update request is used to request a corresponding user plane network element to update a forwarding rule. An update request sent to a user plane network element includes a second forwarding rule, the second forwarding rule includes forwarding information of the transit device, and the second forwarding rule is used by the user plane network element to forward, to the transit device, a data packet whose destination address is not an address of a terminal served by the user plane network element.

According to an example to understand the application, an example provides a communication apparatus, including a processing unit and a communication unit. The processing unit is configured to determine, in a process of creating a session for a terminal in a group, a transit device that provides a 5GVN service for the group, where the transit device is configured to forward data between any two user plane network elements that provide the fifth generation virtual network 5GVN service for the group. The communication unit is configured to send a first forwarding rule to the transit device, where the first forwarding rule includes forwarding information of at least one user plane network element and forwarding information of at least one terminal served by the at least one user plane network element, the first forwarding rule is used by the transit device to forward, to the user plane network element that serves a first terminal, a data packet whose destination address is an address of the first terminal, and the first terminal is any one of the at least one terminal.

In a possible implementation, the transit device is a user plane network element, and the first forwarding rule is an N4 rule.

In a possible implementation, the processing unit is specifically configured to: obtain, via the communication unit from another network element, information about the transit device that provides the 5GVN service for the group; and determine the transit device based on the obtained information about the transit device.

In a possible implementation, the processing unit is specifically configured to: receive, via the communication unit for a first time, a session establishment request sent by the terminal in the group, where the session establishment request is used to request to establish a session to access the 5GVN service; and determine the transit device that provides the 5GVN service for the group.

In a possible implementation, if the session establishment request received by the communication apparatus for the first time is sent by a second terminal in the group, the processing unit is further configured to select a first user plane network element for a session of the second terminal, where if the transit device and the first user plane network element are two different devices, the first forwarding rule includes forwarding information of the first user plane network element and forwarding information of the second terminal.

In a possible implementation, the communication unit is further configured to send a second forwarding rule to the first user plane network element, where the second forwarding rule includes forwarding information of the transit device, and the second forwarding rule is used by the first user plane network element to forward, to the transit device, a data packet whose destination address is not an address of a terminal served by the first user plane network element.

In a possible implementation, the processing unit is specifically configured to: receive, via the communication unit, a session establishment request sent by a third terminal in the group, where the session establishment request is used to request to establish a session to access the 5GVN service; select a second user plane network element for a session of the third terminal; determine whether a quantity of user plane network elements that provide the 5GVN service for the group reaches N, where N is an integer greater than 1; and if the quantity reaches N, determine the transit device that provides the 5GVN service for the group.

In the possible implementation, the transit device is one of N user plane network elements that provide the 5GVN service for the group, the first forwarding rule includes forwarding information of N-1 user plane network elements and forwarding information of terminals served by the N-1 user plane network elements, and the N-1 user plane network elements are user plane network elements other than the transit device in the N user plane network elements that provide the 5GVN service for the group.

In a possible implementation, the method further includes: The communication unit is further configured to send an update request to the N-1 user plane network elements, where the update request is used to request a corresponding user plane network element to update a forwarding rule. An update request sent to a user plane network element includes a second forwarding rule, the second forwarding rule includes forwarding information of the transit device, and the second forwarding rule is used by the user plane network element to forward, to the transit device, a data packet whose destination address is not an address of a terminal served by the user plane network element.

In a possible implementation, the transit device is a device other than N user plane network elements that provide the 5GVN service for the group, and the first forwarding rule includes forwarding information of the N user plane network elements and forwarding information of terminals served by the N user plane network elements.

In a possible implementation, the communication unit is further configured to send an update request to each of the N user plane network elements, where the update request is used to request a corresponding user plane network element to update a forwarding rule. An update request sent to a user plane network element includes a second forwarding rule, the second forwarding rule includes forwarding information of the transit device, and the second forwarding rule is used by the user plane network element to forward, to the transit device, a data packet whose destination address is not an address of a terminal served by the user plane network element.

According to a fourth aspect, an embodiment of this application provides a communication apparatus, and the communication apparatus includes at least one processor and a memory. When the communication apparatus runs, the processor executes computer-executable instructions stored in the memory, to enable the communication apparatus to perform any method provided in the second aspect.

It should be understood that the communication apparatus described in the fourth aspect may further include a bus and a memory. The memory is configured to store code and data. Optionally, the at least one processor, a communication interface, and the memory are coupled to each other.

According to a fifth aspect, an embodiment of this application provides a communication apparatus. The communication apparatus includes a processor and a storage medium, the storage medium stores instructions, and when the instructions are run by the processor, any method provided in the second aspect is implemented.

According to another example to understand the application, an example provides a communication apparatus. The communication apparatus includes one or more modules, configured to implement any method provided in the second aspect. The one or more modules may correspond to all steps in any method provided in the second aspect.

According to another example to understand the application, an example provides a chip. The chip includes a processor and a communication interface, and the communication interface is coupled to the processor. The processor is configured to run a computer program or instructions, to implement any method provided in the second aspect. The communication interface is configured to communicate with another module other than the chip.

Specifically, the chip provided in this embodiment of this application further includes a memory, configured to store the computer program or the instructions.

According to an eighth aspect, an embodiment of this application provides a computer-readable storage medium, and the computer-readable storage medium stores a computer program or instructions. When the computer program or the instructions is/are run on a computer, the computer is enabled to perform any method provided in the second aspect.

According to another example to understand the application, an example provides a computer program product including instructions. When the instructions are run on a computer, the computer is enabled to perform any method provided in the second aspect.

Any apparatus, computer storage medium, computer program product, chip, or communication system provided above is configured to perform the corresponding method provided above. Therefore, for beneficial effects that can be achieved by the apparatus, computer storage medium, computer program product, chip, or communication system, refer to beneficial effects of a corresponding solution in the corresponding method provided above. Details are not described herein again.

### BRIEF DESCRIPTION OF DRAWINGS

FIG. 1 and FIG. 2 are separately schematic diagrams of an architecture of a communication system;
FIG. 3 and FIG. 4 are separately schematic diagrams of an architecture of a communication system according to an embodiment of this application;
FIG. 5 to FIG. 7D are separately schematic flowcharts of a communication method according to an embodiment of this application;
FIG. 8 is a schematic diagram of composition of a communication apparatus according to an example to understand the application; and
FIG. 9 is a schematic diagram of a hardware structure of a communication apparatus according to an example to understand the application.

### DESCRIPTION OF EMBODIMENTS

In descriptions of this application, unless otherwise specified, "/" means "or". For example, A/B may represent A or B. "And/or" in this specification describes only an association relationship for describing associated objects and represents that three relationships may exist. For example, A and/or B may represent the following three cases: Only A exists, both A and B exist, and only B exists. In addition, "at least one" means one or more, and "a plurality of" means two or more. Words such as "first" and "second" do not limit a quantity and an execution sequence, and the words such as "first" and "second" do not indicate a definite difference.

It should be noted that, in this application, terms such as "example" or "for example" are used to represent giving an example, an illustration, or descriptions. Any embodiment or design described as an "example" or "for example" in this application should not be explained as being more preferred or having more advantages than another embodiment or design. Exactly, use of the word such as "example" or "for example" is intended to present a related concept in a specific manner.

The technical solutions provided in embodiments of this application may be applied to various communication systems, for example, a 5G system, a new radio (new radio, NR) system, a multi-radio access technology dual-connectivity (multi-RAT dual-connectivity, MR-DC) system, a future evolved system, or a plurality of communication convergence systems. The 5G system may be a non-standalone (non-standalone, NSA) 5G system or a standalone (standalone, SA) 5G system.

The technical solutions in embodiments of this application may be specifically applied to a 5GVN or a communication network having an architecture similar to that of the 5GVN. The 5GVN is a service provided by current 5G networks, and is mainly used for home communication, enterprise office, factory manufacturing, internet of vehicles, power grid reconstruction, and public security organization. The 5GVN may also be referred to as a 5GVN group (group), a 5G local area network (5G local area network, 5GLAN), a 5GLAN group (group), a local area network (local area network, LAN), a 5G LAN-VN LAN group, a LAN-type service (type service), a LAN-VN, a 5G LAN-type service (type service), or the like. A name of the 5GVN is not specifically limited in embodiments of this application.

The 5GVN service can provide private communication of an internet protocol (internet protocol, IP) type or a non-IP type (for example, an Ethernet type) for two or more terminals in a group. For example, devices in a factory may form a group, and the devices in the group may send Ethernet data packets to each other. Alternatively, office devices (for example, mobile phones, computers, or laptop computers) of employees in a department of an enterprise may form a group, and the office devices in the group may send IP data packets to each other, or the like. If two terminals are not in a same group, the two terminals cannot communicate with each other.

For 5GVN services, the 3rd Generation Partnership Project (3rd generation partnership project, 3GPP) technical rule (technical rule, TR) 23.734 proposes to support one to one communication and one to many communication in the 5GVN. Specifically, to support one to one communication and one to many communication in the 5GVN, a 3GPP network is required to support group-based unicast, multicast, and broadcast, support duplication and distribution of multicast and broadcast packets, and support any terminal as a multicast source.

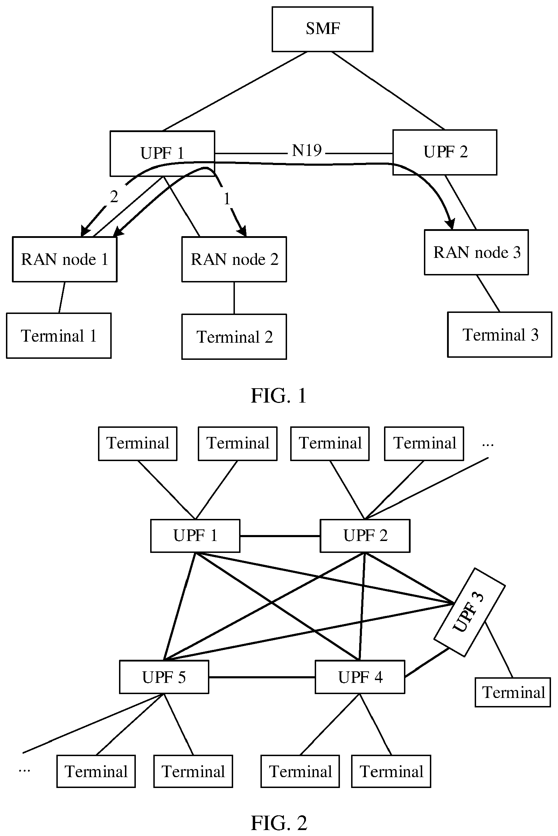

To meet the requirements, according to the current 3GPP technical standard (technical standard, TS) 23.501, one 5GVN is managed by only one SMF. As shown in FIG. 1, the SMF simultaneously manages one or more UPFs (FIG. 1 uses an example in which the SMF manages a UPF 1 and a UPF 2). During one to one communication between two terminals (for example, a terminal 1 and a terminal 2 in FIG. 1) served by one UPF, transmission (shown by a line 1) is performed in a local switching (local switch) manner of the UPF 1. During one to one communication between two terminals (for example, the terminal 1 and a terminal 3 in FIG. 1) served by different UPFs, transmission (shown by a line 2, where an interface between UPFs is referred to as an N19 interface, and a tunnel between UPFs may be referred to as an N19 tunnel) is performed through a tunnel between the UPF 1 and the UPF 2. In addition, a forwarding rule (denoted as a third forwarding rule) is created on the UPF 1 and the UPF 2. Specifically, the third forwarding rule configured on the UPF 2 is used by the UPF 2 to transmit a data packet whose destination address is an address of a terminal 1 or an address of a terminal 2 to the UPF 1 through the tunnel (for example, identified by a tunnel endpoint identifier (tunnel endpoint identifier, TEID) of the UPF 1) between the UPF 2 and the UPF 1. Correspondingly, the third forwarding rule configured on the UPF 1 is used by the UPF 1 to transmit a data packet whose destination address is an address of a terminal 3 to the UPF 2 through the tunnel (for example, identified by a TEID of the UPF 2) between the UPF 1 and the UPF 2. It should be noted that, if the UPF 1 further serves another terminal, for example, a terminal 4, the third forwarding rule configured on the UPF 2 is further used to transmit a data packet whose destination address is an address of the terminal 4 to the UPF 1 through the tunnel between the UPF 1 and the UPF 2.

Specifically, each terminal accesses the 5GVN service by using a session corresponding to each terminal. The session in embodiments of this application may be a protocol data unit (protocol data unit, PDU) session (session) in a 5G network. In a process of establishing a session for a terminal, the SMF may establish an N3 tunnel between a UPF that provides the service for the terminal and a RAN node accessed by the terminal, and configure another forwarding rule (denoted as a fourth forwarding rule) for each UPF. The fourth forwarding rule is used by the UPF to send, through the N3 tunnel between the UPF and the RAN node accessed by a specific terminal to the RAN node accessed by the specific terminal, a data packet whose destination address is an address of the specific terminal (the specific terminal is a terminal served by the UPF).

The terminal 1 is used as an example. An N3 tunnel between the UPF 1 and a radio access network (radio access network, RAN) node 1 is established for the terminal 1, and a fourth forwarding rule is established or configured on the UPF 1. The fourth forwarding rule is used by the UPF 1 to send a data packet whose destination address is the address of the terminal 1 to the RAN node 1 through the N3 tunnel corresponding to the terminal 1.

Similarly, a session is established for the terminal 2 to access the 5GVN service. An N3 tunnel between the UPF 1 and a RAN node 2 (the RAN node 2 may be the same as the RAN node 1) is established for the terminal 2, and a fourth forwarding rule is established or configured on the UPF 1. The fourth forwarding rule is used by the UPF 1 to send a data packet whose destination address is the address of the terminal 2 to the RAN node 2 through the N3 tunnel corresponding to the terminal 2.

Similarly, a session is established for the terminal 3 to access the 5GVN service. An N3 tunnel between the UPF 2 and a RAN node 3 is established, and a fourth forwarding rule is established or configured on the UPF 2. The fourth forwarding rule is used by the UPF 2 to send a data packet whose destination address is the address of the terminal 3 to the RAN node 3 through the N3 tunnel corresponding to the terminal 3.

In addition, if the SMF detects that there are a plurality of UPFs (for example, the UPF 1 and the UPF 2 shown in FIG. 1), the SMF further needs to establish tunnels between the UPFs. A specific process is as follows: The SMF or the UPF 1 allocates tunnel information on a UPF 1 side. The SMF notifies the UPF 2 of the tunnel information on the UPF 1 side. The SMF or the UPF 2 allocates tunnel information on the UPF 2 side. The SMF notifies the UPF 1 of the tunnel information on the UPF 2. In this case, a tunnel between the UPF 1 and the UPF 2 is established. In this way, if the terminal 1 sends a data packet to the terminal 3, the terminal 1 may first send the data packet to the UPF 1, the UPF 1 sends the data packet to the UPF 2 through the tunnel between the UPF 1 and the UPF 2, and the UPF 2 then sends the data packet to the terminal 3.

In embodiments of this application, one 5GVN may provide a group communication service for one or more groups, that is, one 5GVN may correspond to one or more groups. One SMF or UPF may also provide a communication service for a plurality of groups.

In the architecture shown in FIG. 1, the SMF and the UPF belong to network elements in a core network. The SMF is mainly responsible for all control plane functions of terminal session management, including selection and control of UPFs, IP address assignment and management, session quality of service (quality of service, QoS) management, obtaining a policy and charging control (policy and charging control, PCC) policy from a policy control function (policy control function, PCF), and the like. The UPF, as an anchor point of a PDU session connection, is responsible for the following functions of a terminal: data packet filtering, data transmission/forwarding, rate control, charging information generation, QoS handling for a user plane, uplink transmission authentication, transport level verification, downlink data packet buffering, downlink data notification triggering, and the like.

In the architecture shown in FIG. 1, the RAN node may also be referred to as an access network device. For example, the RAN node may be a transmission reception point (transmission reception point, TRP), a base station, a control node in various forms (for example, a network controller, a wireless controller (for example, a wireless controller in a cloud radio access network (cloud radio access network, CRAN) scenario), or the like. Specifically, the RAN node may be a macro base station, a micro base station (also referred to as a small cell), a relay station, an access point (access point, AP), or the like in various forms, or may be an antenna panel of a base station. The control node may be connected to a plurality of base stations, and configure resources for a plurality of terminals covered by the plurality of base stations. In systems in which different radio access technologies are used, devices that have base station functions may have different names. For example, a long term evolution (long term evolution, LTE) system may be referred to as an evolved base station (evolved NodeB, eNB or eNodeB), and a 5G system or an NR system may be referred to as a next generation base station node (next generation node base station, gNB). A specific name of the base station is not limited in this application. The RAN node may alternatively be a network device or the like in a future evolved public land mobile network (public land mobile network, PLMN).

In the architecture shown in FIG. 1, the terminal is an entity on a user side configured to receive a signal, send a signal, or receive and send a signal. The terminal is configured to provide a user with one or more of a voice service and a data connectivity service. Alternatively, the terminal may be referred to as user equipment (user equipment, UE), a terminal device, an access terminal, a subscriber unit, a subscriber station, a mobile station, a remote station, a remote terminal, a mobile device, a user terminal, a wireless communication device, a user agent, or a user apparatus. The terminal may be a vehicle to everything (vehicle to everything, V2X) device, for example, a smart car (smart car or intelligent car), a digital car (digital car), an unmanned car (unmanned car, driverless car, pilotless car, or automobile), an autonomous car (self-driving car or autonomous car), a pure electric vehicle (pure EV or Battery EV), a hybrid electric vehicle (hybrid electric vehicle, HEV), a range extended electric vehicle (range extended EV, REEV), a plug-in hybrid electric vehicle (plug-in HEV, PHEV), a new energy vehicle (new energy vehicle), and a road site unit (road site unit, RSU). Alternatively, the terminal may be a device to device (device to device, D2D) device, for example, an electricity meter or a water meter. Alternatively, the terminal may be a mobile station (mobile station, MS), a subscriber unit (subscriber unit), an unmanned aerial vehicle, an internet of things (internet of things, IoT) device, a station (station, STA) in a WLAN, a cellular phone (cellular phone), a smart phone (smart phone), a cordless phone, a wireless data card, a tablet computer, a session initiation protocol (session initiation protocol, SIP) phone, a wireless local loop (wireless local loop, WLL) station, a personal digital assistant (personal digital assistant, PDA) device, a laptop computer (laptop computer), a machine type communication (machine type communication, MTC) terminal, a handheld device with a wireless communication function, a computing device or another processing device connected to a wireless modem, a vehicle-mounted device, or a wearable device (which may also be referred to as a wearable intelligent device). Alternatively, the terminal may be a terminal in a next generation communication system, for example, a terminal in a 5G system, a terminal in a future evolved PLMN, or a terminal in an NR system.

Currently, refer to FIG. 2. UPFs simultaneously managed by an SMF form a full mesh (full mesh) network, that is, an N19 tunnel is established between every two UPFs, and data between terminals served by different UPFs is transmitted through the N19 tunnel between different UPFs. In addition, each UPF maintains forwarding information (for example, address information of a terminal) of terminals served by all other UPFs. If there are many UPFs, the following problems may occur: (1) A large quantity of N19 tunnels are established. (2) When a terminal switches a UPF, forwarding information of the terminal needs to be updated on all other UPFs. Consequently, forwarding information synchronization is very complex. The SMF and the RAN are omitted in FIG. 2, FIG. 3, and FIG. 4 in this application, and connection relationships between the SMF and another node and between the RAN and another node are the same as those in FIG. 1.

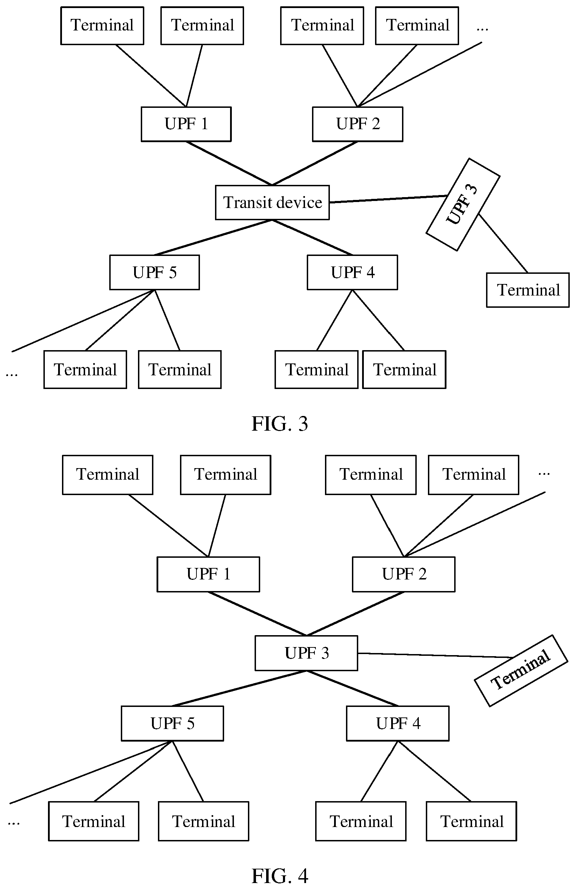

To resolve the problems, a star topology architecture is introduced in this application. In the star topology architecture, there is one transit device, the transit device is connected to other UPFs, and the transit device stores forwarding information (for example, address information of a terminal) of all terminals. Refer to FIG. 3. The transit device may be an independent device, for example, a UPF that previously has not served any terminal, that is, when no terminal creates a session, the UPF is used as a session anchor. Refer to FIG. 4. The transit device may alternatively be a UPF that serves a terminal, for example, a UPF 3. In this case, each UPF needs to establish an N19 tunnel with only the transit device.

Compared with a full mesh architecture, the star topology architecture may reduce a quantity of N19 tunnels. Specifically, if a quantity of UPFs is N, Nx(N-1)/2 N19 tunnels need to be established in the full mesh architecture, and N (the transit device is an independent device) or N-1 (the transit device is a UPF that serves a terminal) N19 tunnels need to be established in the star topology architecture. FIG. 2, FIG. 3, and FIG. 4 are used as examples. FIG. 2 shows a full mesh architecture, and 10 N19 tunnels need to be established. FIG. 3 shows a star topology architecture in which the transit device is an independent device, and only five N19 tunnels need to be established. FIG. 4 shows a star topology architecture in which the transit device is a UPF that serves a terminal, and only four N19 tunnels need to be established.

In the star topology architecture compared with the full mesh architecture, the transit device stores forwarding information of all terminals, and other UPFs store forwarding information of the transit device (for example, an address of the transit device). When a terminal switches a UPF, forwarding information needs to be synchronized on only the transit device, and less forwarding information needs to be synchronized. This can reduce complexity of forwarding information synchronization.

In addition, the transit device may alternatively be a router, a switch, another device that have a forwarding function, or the like. In this case, a tunnel established between the UPF and the transit device is an N6 tunnel.

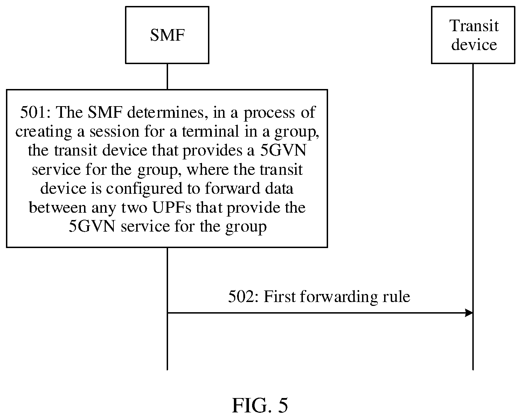

Based on the introduced star topology architecture, this application provides a communication method (also referred to as a method for optimizing a transmission path). For ease of description, in the following, a session management network element is represented by an SMF, a user plane network element (also referred to as a user plane function network element) is represented by a UPF, and an access network device is represented by a RAN node. As shown in FIG. 5, the method includes the following steps.

501: An SMF determines, in a process of creating a session for a terminal in a group, a transit device that provides a 5GVN service for the group, where the transit device is configured to forward data between any two UPFs that provide the 5GVN service for the group.

One group includes one or more terminals. The group in embodiments of this application may also be referred to as a 5GVN group. The transit device may be a UPF, a router, a switch, or another device that have a forwarding function.

During specific implementation of step 501, the transit device that provides the 5GVN service for the group may be determined in the following manner one or manner two.

Manner one: The SMF directly determines the transit device.

In the manner one, information about the transit device may be directly configured on the SMF, or the SMF receives the information about the transit device from another network element (for example, a unified data management (unified data management, UDM), a PCF, or a network repository function (network repository function, NRF)) (in this case, the information about the transit device can be configured on the UDM, the PCF, or the NRF). In this way, the SMF can directly determine the transit device.

If the SMF receives the information about the transit device from the another network element, that the SMF determines a transit device that provides a 5GVN service for the group includes: The SMF obtains the information about the transit device that provides the 5GVN service for the group from the another network element, and the SMF determines the transit device based on the obtained information about the transit device. Specifically, the SMF may first send a request message to the another network element, where the request message includes a 5GVN identifier, and the request message is used to request the information about the transit device. The another network element determines, based on the 5GVN identifier in the request message, the information about the transit device corresponding to the 5GVN identifier, and sends the information about the transit device to the SMF. The another network element may be the UDM, the PCF, or the NRF.

The information about the transit device may be a device identifier of the transit device, for example, identification information that can uniquely identify the transit device. When the transit device is the UPF or the router, the device identifier may be an IP address of the UPF or the router. When the transit device is the switch, the device identifier may be a MAC address.

Manner two: The SMF selects the transit device according to some preset rules or policies.

In the manner two, the preset rules or policies may be configured on the SMF, or may be obtained by the SMF from a UDM, a PCF, or an NRF. For example, the SMF may determine the transit device based on one or more of a coverage area of a 5GVN (for example, an area of an enterprise campus covered by the 5GVN), load of the UPF in the 5GVN, performance of the UPF in the 5GVN, and the like. For example, the SMF may determine that a UPF, a router, or a switch that is close to a center of the coverage area of the 5GVN is the transit device. Alternatively, the SMF determines that a UPF whose load is lower in the UPFs in the 5GVN is the transit device. Alternatively, the SMF determines that a UPF whose performance is better in the UPFs in the 5GVN is the transit device.

Before step 501 is performed, an operator or an operation, administration and maintenance (operation administration and maintenance, OAM) network element may preconfigure, on the SMF, one or more 5GVNs in which a star topology architecture networking is required, or preconfigure one or more 5GVNs in which a transit device is required for forwarding. The SMF determines, based on the preconfigured information, whether a star topology architecture networking is required or a transit device is required for forwarding in a current 5GVN. The operator or the OAM network element may configure, on the UDM, the PCF, or the NRF, one or more 5GVNs in which the star topology architecture networking is required, or preconfigure one or more 5GVNs in which the transit device is required for forwarding. The SMF determines, based on interaction with the UDM, the PCF, or the NRF, whether the star topology architecture networking is required or the transit device is required for forwarding in a current 5GVN. The SMF may perform step 501 when determining that the star topology architecture networking is required or the transit device is required for forwarding in the current 5GVN

502: The SMF sends a first forwarding rule to the transit device, where the first forwarding rule includes forwarding information of at least one UPF and forwarding information of at least one terminal served by the at least one UPF, the first forwarding rule is used by the transit device to forward a data packet whose destination address is an address of the first terminal to the UPF that serves a first terminal, and the first terminal is any one of the at least one terminal. Correspondingly, the transit device receives the first forwarding rule from the SMF, and forwards, according to the first forwarding rule, the data packet whose destination address is the address of the first terminal to the UPF that serves the first terminal.

The forwarding information of the UPF is information used to forward the data packet to the UPF. The forwarding information of the UPF may be tunnel information of the UPF, for example, an IP address and a TEID. The tunnel information of the UPF may be allocated by the UPF itself, or may be allocated by the SMF. If the tunnel information of the UPF is allocated by the SMF, the SMF needs to send the tunnel information of the UPF to the corresponding UPF.

The forwarding information of the terminal is information used to forward the data packet to the terminal. The forwarding information of the terminal may be address information of the terminal, for example, an IP address of the terminal, a media access control (media access control, MAC) address of the terminal, or other information identifying an address of the terminal. The forwarding information of the terminal may alternatively be other information that is used to forward the data packet to the terminal, for example, a port number. In some descriptions of embodiments of this application, an example in which the forwarding information of the terminal is the address information of the terminal is used to describe the method provided in embodiments of this application. However, this should not be construed as a limitation on embodiments of this application. It may be understood that the address information of the terminal mentioned below may alternatively be replaced with other forwarding information of the terminal. This is not limited in this application.

In embodiments of this application, the address information of the terminal is used to encapsulate the data packet. When a terminal is a sender terminal, address information of the terminal may be used as a source address. When a terminal is a receiver terminal, address information of the terminal may be used as a destination address, to encapsulate a data packet. For example, the sender terminal encapsulates the data packet by using the address information of the receiver terminal. In addition, the data packet may further be encapsulated by using the address information of the sender terminal. This helps the receiver terminal determine a sender terminal from which the data packet is sent.

It should be noted that the data packet may carry forwarding information of a destination node of the data packet, and the transit device may determine, based on the forwarding information of the destination node carried in the data packet, which terminal the data packet is to be sent to. For example, when a data packet needs to be sent to a terminal 1, the data packet may carry address information of the terminal 1. The transit device may determine, based on the address information of the terminal 1 carried in the data packet, that the data packet is to be sent to the terminal 1.

After receiving the forwarding information of the UPF and the forwarding information of the terminal served by the UPF, the transit device stores the information. In the stored information, there is a correspondence between the forwarding information of the UPF and the forwarding information of the terminal served by the UPF. In this way, after receiving a data packet sent to a terminal, the transit device may determine which UPF the data packet is sent to.

For example, the SMF sends forwarding information of three UPFs and forwarding information of terminals served by the three UPFs to the transit device. Terminals served by a UPF 1 in the three UPFs include a terminal 1 and a terminal 2, terminals served by a UPF 2 in the three UPFs include a terminal 3, a terminal 4, and a terminal 5, and terminals served by a UPF 3 in the three UPFs include a terminal 6 and a terminal 7. In this case, for information stored in the transit device, refer to Table 1 or Table 2.

**Table 1**

| Forwarding information of a UPF | Forwarding information of a terminal served by the UPF |
|---|---|
| Forwarding information of the UPF 1 | Forwarding information of the terminal 1 |
| | Forwarding information of the terminal 2 |
| Forwarding information of the UPF 2 | Forwarding information of the terminal 3 |
| | Forwarding information of the terminal 4 |
| | Forwarding information of the terminal 5 |
| Forwarding information of the UPF 3 | Forwarding information of the terminal 6 |
| | Forwarding information of the terminal 7 |

**Table 2**

| Forwarding information of a terminal | Forwarding information of a UPF that serves the terminal |
|---|---|
| Forwarding information of the terminal 1 | Forwarding information of the UPF 1 |
| Forwarding information of the terminal 2 | Forwarding information of the UPF 1 |
| Forwarding information of the terminal 3 | Forwarding information of the UPF 2 |
| Forwarding information of the terminal 4 | Forwarding information of the UPF 2 |
| Forwarding information of the terminal 5 | Forwarding information of the UPF 2 |
| Forwarding information of the terminal 6 | Forwarding information of the UPF 3 |
| Forwarding information of the terminal 7 | Forwarding information of the UPF 3 |

In an example, when the transit device is a UPF, the first forwarding rule is an N4 rule (N4 rules). The N4 rule includes at least one packet detection rule (packet detection rule, PDR) (including one or more fields) and at least one forwarding action rule (forwarding action rule, FAR) (including one or more fields). Each PDR includes one FAR identifier (ID), used to represent an FAR corresponding to the PDR. Forwarding information of a terminal may be carried in a PDR, and forwarding information of a UPF that serves the terminal may be carried in an FAR corresponding to the PDR. In this case, an example in which the forwarding information of the terminal is the address information of the terminal is used. When detecting a data packet whose destination address is the address of the terminal in the PDR, the UPF transmits the data packet by using the forwarding information of the UPF in the FAR corresponding to the PDR.

In another example, when the transit device is a router, a switch, or another device that have a forwarding function, that the SMF sends a first forwarding rule to the transit device includes: The SMF directly sends the first forwarding rule to the transit device. Alternatively, the SMF sends the first forwarding rule via another network function entity (for example, an application function (application function, AF) or a network exposure function (network exposure function, NEF)). The first forwarding rule may be N6 traffic routing information (N6 traffic routing information). The N6 traffic routing information may indicate any tunnelling that may be used over N6, and the nature of the information depends on deployment. For example, the N6 traffic routing information may include an IP address and a user datagram protocol (user datagram protocol, UDP) port number.

It should be noted that forwarding rules sent by the SMF to the transit device in embodiments of this application are all referred to as first forwarding rules. In different scenarios, information included in the first forwarding rules and functions of the first forwarding rules may be different. Details are subject to explanations in corresponding parts. Certainly, each forwarding rule sent by the SMF to the transit device may alternatively have a different name. This is not limited in this application.

According to the method provided in this embodiment of this application, the SMF may determine the transit device in the 5GVN, and send the forwarding information of the UPF and the forwarding information of the terminal to the transit device. In this way, the transit device correctly forwards, to the UPF that serves the terminal, the received data packet sent to the terminal. Forwarding data between two UPFs by the transit device can reduce a quantity of N19 tunnels and decrease complexity of forwarding information synchronization.

During specific implementation of step 501, the SMF may perform step 501 in the following scenario 1 (of 5GVN networking) or scenario 2 (in which a quantity of UPFs in the 5GVN reaches N). The following describes in detail specific implementations of step 501 and solutions further provided in this application in the scenario 1 and scenario 2.

### Scenario 1 of 5GVN networking:

In the scenario 1, step 501 may include the following step 501-11 and step 501-12 during specific implementation.

501-11: The SMF receives, for a first time, a session establishment request sent by the terminal in the group, where the session establishment request is used to request to establish a session to access the 5GVN service.

501-12: The SMF determines the transit device that provides the 5GVN service for the group.

In embodiments of this application, the session establishment request sent by any terminal to the SMF may include an identifier of the terminal and a group identifier.

The identifier of the terminal may be one or more of the following: an IP address, a MAC address, a subscription permanent identifier (subscription permanent identifier, SUPI), a permanent equipment identifier (permanent equipment identifier, PEI), a generic public subscription identifier (generic public subscription identifier, GPSI), an international mobile subscriber identifier (international mobile subscriber identifier, IMSI), an international mobile equipment identity (international mobile equipment identity, IMEI), and a mobile station international integrated services digital network number (mobile station international integrated service digital network number, MSISDN). For an identifier of a terminal in the following embodiments, refer to the description herein. Details are not described subsequently again.

The group identifier is used to identify a group to which the terminal sending the session establishment request belongs. The group identifier includes a 5GVN identifier and/or a Group identifier. Specifically, the group identifier may be a data network name (data network name, DNN), DNN and single network slice selection assistance information (single network slice selection assistance information, S-NSSAI) (namely, a network slice identifier), or a specific Group identifier (Group ID). Optionally, the UDM may store a correspondence between a DNN and a Group ID, or the UDM may store a correspondence between a DNN, an S-NSSAI, and a Group ID. One 5GVN may correspond to one group, or one 5GVN may correspond to a plurality of groups. The 5GVN identifier is used to identify a 5GVN to which a second terminal belongs.

It should be understood that the group identifier may be a 5GVN identifier when one 5GVN corresponds to one group. The group identifier may be a 5GVN identifier and a Group identifier when one 5GVN corresponds to a plurality of groups. The Group identifier is an identifier of a group to which the terminal sending the session establishment request belongs in a 5GVN indicated by the 5GVN identifier.

In embodiments of this application, a terminal may send the session establishment request to the SMF via an AMF. The AMF may determine the SMF (the SMF manages a 5GVN identified by a 5GVN identifier) based on the 5GVN identifier in the received session establishment request, and sends the session establishment request to the SMF.

In the scenario 1, if the session establishment request received by the SMF for a first time is sent by a second terminal in the group (the second terminal may be any terminal in the group), all terminals in the group do not send the session establishment request to the SMF before the second terminal sends the session establishment request to the SMF.

In the scenario 1, after receiving the session establishment request, the SMF selects a UPF for a session of the second terminal as a PDU session anchor (PDU session anchor, PSA) of the session. Before selecting the UPF, the SMF may obtain subscription data from a UDM, obtain policy information from a PCF, or obtain information stored by an NRF from the NRF. If the information includes information about the transit device, the SMF may determine the transit device based on the obtained information about the transit device. Certainly, the SMF may specifically obtain the information about the transit device from the UDM, the PCF, or the NRF after selecting the PDU session anchor UPF for the second terminal. This is not limited in this application. If the information about the transit device is configured on the SMF, the SMF may alternatively determine the transit device based on the information about the transit device configured on the SMF.

In the scenario 1, optionally the method further includes: The SMF selects a UPF (denoted as a first UPF) for a session of the second terminal. It may be understood that the first UPF is a 1^{st} UPF that provides a service for the group. If the transit device and the first UPF are two different devices, the first forwarding rule includes forwarding information of the first UPF and forwarding information of the second terminal. If the transit device and the first UPF are a same device, step 502 may not be performed. The forwarding information of the first UPF and the forwarding information of the second terminal may be carried in one message, or may be carried in two different messages. If the forwarding information of the first UPF and the forwarding information of the second terminal are carried in a single message, for example, both the forwarding information of the first UPF and the forwarding information of the second terminal may be carried in a session establishment request or a session update request.

The SMF configures a forwarding rule for only the transit device in step 502. This can only ensure that the transit device correctly sends a data packet destined for a terminal to a UPF serving the terminal. A forwarding rule further needs to be configured for the UPF, to ensure that the UPF correctly forwards data. The following describes a process of configuring a forwarding rule for the UPF by using a case 1.1 and a case 1.2.

Case 1.1: The UPF needs to know forwarding information of the transit device and forwarding information of a terminal served by the UPF, to forward data.

In the case 1.1, after the SMF selects the first UPF for the session of the second terminal, the method further includes: The SMF sends a second forwarding rule to the first UPF, where the second forwarding rule includes forwarding information of the transit device, and the second forwarding rule is used by the first UPF to forward a data packet whose destination address is not an address of the terminal served by the first UPF to the transit device.

In the case 1.1 and the following case 2.1 and case 2.3, optionally the second forwarding rule further includes indication information, the indication information is used to indicate a corresponding UPF to forward data according to the second forwarding rule when a preset condition is met, and the preset condition is that a destination address corresponding to a received data packet is not an address of a terminal served by the UPF. In this case, after receiving a data packet, a UPF may first perform detection. When it is detected that a destination address corresponding to the data packet is an address of a terminal served by the UPF, the foregoing fourth forwarding rule is used for data forwarding. When it is detected that the destination address corresponding to the data packet is not the address of the terminal served by the UPF, the second forwarding rule is used for data forwarding.

The forwarding information of the terminal served by the UPF may be sent to the UPF in a process in which the terminal establishes a session, so that the UPF sends, to a RAN node accessed by the terminal, the data packet whose destination address is a specific terminal (the specific terminal is a terminal served by the UPF) according to the fourth forwarding rule through an N3 tunnel between the UPF and the RAN node accessed by the terminal. In this way, the data packet is further sent to the terminal.

The first UPF stores forwarding information (for example, address information of a terminal) of all served terminals. For example, it is assumed that terminals served by the first UPF include a terminal 1, a terminal 2, and a terminal 3. For information stored in the first UPF, refer to Table 3 or Table 4. In this case, when the first UPF detects that a data packet is not sent to the terminal served by the first UPF, the first UPF forwards the data packet to the transit device.

**Table 3**

| UPF | Forwarding information of a terminal served by the UPF |
|---|---|
| First UPF | Forwarding information of the terminal 1 |
| | Forwarding information of the terminal 2 |
| | Forwarding information of the terminal 3 |

**Table 4**

| Forwarding information of a terminal |
|---|
| Forwarding information of the terminal 1 |
| Forwarding information of the terminal 2 |
| Forwarding information of the terminal 3 |

In this embodiment of this application, all forwarding rules sent by the SMF to the UPF (for example, the following second forwarding rule and the foregoing third forwarding rule and fourth forwarding rule) may be N4 rules. In the case 1.1 and the following case 2.1 and case 2.3, a destination address in a PDR in the second forwarding rule may be set to "unknown (unknown)", and information included in an FAR may be forwarding information of the transit device. Alternatively, the second forwarding rule is a generic matching or a default matching (match-all) forwarding rule, and an FAR corresponding to the second forwarding rule includes forwarding information of the transit device, used to indicate a corresponding transmission path. Optionally, the generic matching forwarding rule may include the indication information. It should be noted that a priority of the second forwarding rule is generally low, that is, the UPF generally first matches a forwarding rule corresponding to the terminal served by the UPF. In other words, only when the forwarding rules corresponding to the terminal served by the UPF are not matched (that is, when the UPF detects a data packet whose destination address is not the address of the terminal served by the UPF), the second forwarding rule is used for transmission.

It should be noted that forwarding rules sent by the SMF to the UPF in embodiments of this application are all referred to as second forwarding rules. In different scenarios, information included in the second forwarding rules and functions of the second forwarding rules may be different. Details are subject to explanations in corresponding parts. Certainly, forwarding rules sent by the SMF to different UPFs or a plurality of forwarding rules sent by the SMF to a same UPF may have different names. This is not limited in this application.

In embodiments of this application, the forwarding information of the transit device is forwarding information used to forward a data packet to the transit device. If the transit device is a UPF, the forwarding information of the transit device may be tunnel information of the UPF, for example, an IP address and a TEID. If the transit device is a router, the forwarding information of the transit device may be an IP address and/or a port number of the router. If the transit device is a switch, the forwarding information of the transit device may be port information of the switch, for example, a port number. For descriptions of the forwarding information of the transit device in the following, refer to this part. Details are not described herein again.

In the case 1.1, if the SMF subsequently receives a session establishment request sent by another terminal, for example, the SMF receives a session establishment request of a fourth terminal in the group, and the session establishment request is used to request to establish a session for the fourth terminal to access the 5GVN service, the method further includes step (11) and step (12):
(11): The SMF selects a third UPF for the session of the fourth terminal.
(12): The SMF sends a first forwarding rule to the transit device, where the first forwarding rule includes forwarding information of the third UPF and forwarding information of the fourth terminal, and the first forwarding rule is used by the transit device to forward a data packet whose destination address is an address of the fourth terminal to the third UPF.

If the third UPF is a UPF newly selected by the SMF for the group, after step (12), the method further includes the following step (13):
(13): The SMF sends a second forwarding rule to the third UPF, where the second forwarding rule includes forwarding information of the transit device, and the second forwarding rule is used by the third UPF to forward a data packet whose destination address is not the address of the terminal served by the third UPF to the transit device.

If the third UPF is a UPF (for example, the first UPF) previously selected by the SMF for the group, because the SMF has previously sent the second forwarding rule including the forwarding information of the transit device to the UPF, the second forwarding rule including the forwarding information of the transit device does not need to be sent.

In the case 1.1, when a UPF receives a data packet whose destination address is an address of a terminal, if address information of the terminal indicates that the terminal is a terminal served by the UPF, the UPF sends the data packet to the terminal via a RAN node accessed by the terminal. If the address information of the terminal indicates that the terminal is not a terminal served by the UPF, the UPF sends the data packet to the transit device.

Case 1.2: The UPF needs to know forwarding information of the transit device and forwarding information of a terminal served by another UPF other than the UPF, to forward data.

In the case 1.2, after the SMF selects the first UPF for the session of the second terminal, because there is only one UPF that provides a service for the group in this case, the SMF does not need to send, to the first UPF, a second forwarding rule that includes the forwarding information of the transit device and the forwarding information of the terminal served by the another UPF other than the first UPF.

In the case 1.2, information stored in one UPF includes forwarding information of the transit device, the forwarding information of the terminal served by the another UPF other than the UPF, and forwarding information of the UPF and a terminal served by the UPF. In this case, if a UPF receives a data packet whose destination address is an address of a terminal, if the terminal is a terminal served by the UPF, the UPF sends the data packet to the terminal, or if the terminal is a terminal served by the another UPF, the UPF sends the data packet to the transit device.

For example, it is assumed that the 5GVN includes a UPF 1, a UPF 2, and a UPF 3, terminals served by the UPF 1 include a terminal 1 and a terminal 2, terminals served by the UPF 2 include a terminal 3, a terminal 4, and a terminal 5, and terminals served by the UPF 3 include a terminal 6 and a terminal 7. For information stored in the UPF 1, refer to Table 5 or Table 6.

**Table 5**

| UPF or transit device | Forwarding information of a terminal |
|---|---|
| UPF 1 | Forwarding information of the terminal 1 |
| | Forwarding information of the terminal 2 |
| Transit device | Forwarding information of the terminal 3 |
| | Forwarding information of the terminal 4 |
| | Forwarding information of the terminal 5 |
| | Forwarding information of the terminal 6 |
| | Forwarding information of the terminal 7 |

**Table 6**

| Forwarding information of a terminal | UPF or transit device |
|---|---|
| Forwarding information of the terminal 1 | UPF 1 |
| Forwarding information of the terminal 2 | UPF 1 |
| Forwarding information of the terminal 3 | Transit device |
| Forwarding information of the terminal 4 | Transit device |
| Forwarding information of the terminal 5 | Transit device |
| Forwarding information of the terminal 6 | Transit device |
| Forwarding information of the terminal 7 | Transit device |

In the case 1.2, if the SMF subsequently receives a session establishment request sent by another terminal, for example, the SMF receives a session establishment request of a fourth terminal in the group, and the session establishment request is used to request to establish a session for the fourth terminal to access the 5GVN service, the method further includes step (21) and step (22):
(21): The SMF selects a third UPF for the session of the fourth terminal.
(22): The SMF sends a first forwarding rule to the transit device, where the first forwarding rule includes forwarding information of the third UPF and forwarding information of the fourth terminal, and the first forwarding rule is used by the transit device to forward a data packet whose destination address is an address of the fourth terminal to the third UPF.

If the third UPF is a UPF newly selected by the SMF for the group, the third UPF does not know how to forward a data packet of a terminal served by another UPF, and the another UPF also does not know how to forward a data packet of a terminal served by the third UPF. Therefore, after step (22), the method further includes the following step (23):
(23): The SMF sends a second forwarding rule to each UPF that provides the 5GVN service for the group, where a second forwarding rule sent to the third UPF includes the forwarding information of the transit device and the forwarding information of the terminal served by the another UPF other than the third UPF, and the second forwarding rule sent to the third UPF is used by the third UPF to forward a data packet whose destination address is an address of the terminal served by the another UPF other than the third UPF to the transit device; and a second forwarding rule sent to the another UPF other than the third UPF includes the forwarding information of the transit device and the forwarding information of the fourth terminal, and the second forwarding rule sent to the another UPF other than the third UPF is used by the another UPF other than the third UPF to forward a data packet whose destination address is the address of the fourth terminal to the transit device.

If the third UPF is a UPF (for example, the first UPF) previously selected by the SMF for the group, the third UPF knows how to forward a data packet of a terminal served by another UPF, but the another UPF does not know how to forward a data packet of a terminal served by the third UPF. Therefore, after step (22), the method further includes the following step (24):
(24): The SMF sends a second forwarding rule to the another UPF other than the third UPF, where the second forwarding rule includes the forwarding information of the transit device and the forwarding information of the fourth terminal, and the second forwarding rule is used by the another UPF other than the third UPF to forward a data packet whose destination address is the address of the fourth terminal to the transit device.

In the case 1.2 and the following case 2.2 and case 2.4, when the second forwarding rule includes the forwarding information of the transit device and the forwarding information of the terminal, information included in a PDR may be the forwarding information of the terminal, and information included in an FAR may be the forwarding information of the transit device. In this case, when detecting a data packet whose destination address is an address of the terminal in the PDR, the UPF transmits the data packet by using the forwarding information of the transit device in the FAR corresponding to the PDR. If the UPF detects that a destination address of a data packet cannot be matched with a corresponding PDR, the data packet may be discarded.

It should be noted that the SMF stores forwarding information (for example, address information of the terminal) of all terminals that have established sessions in the group and information (for example, a UPF identifier) about a corresponding UPF that serves the terminal, to send the second forwarding rule to the UPF. For example, it is assumed that the 5GVN includes a UPF 1, a UPF 2, and a UPF 3, terminals served by the UPF 1 include a terminal 1 and a terminal 2, terminals served by the UPF 2 include a terminal 3, a terminal 4, and a terminal 5, and terminals served by the UPF 3 include a terminal 6 and a terminal 7. For information stored in the SMF, refer to Table 7 or Table 8.

**Table 7**

| UPF | Forwarding information of a terminal served by the UPF |
|---|---|
| UPF 1 | Forwarding information of the terminal 1 |
| | Forwarding information of the terminal 2 |
| UPF 2 | Forwarding information of the terminal 3 |
| | Forwarding information of the terminal 4 |
| | Forwarding information of the terminal 5 |
| UPF 3 | Forwarding information of the terminal 6 |
| | Forwarding information of the terminal 7 |

**Table 8**

| Forwarding information of a terminal | UPF |
|---|---|
| Forwarding information of the terminal 1 | UPF 1 |
| Forwarding information of the terminal 2 | UPF 1 |
| Forwarding information of the terminal 3 | UPF 2 |
| Forwarding information of the terminal 4 | UPF 2 |
| Forwarding information of the terminal 5 | UPF 2 |
| Forwarding information of the terminal 6 | UPF 3 |
| Forwarding information of the terminal 7 | UPF 3 |

It should be noted that forms of Table 7 and Table 3 are similar. Table 3 records forwarding information of all terminals served by one UPF, and Table 3 may be considered as a subset of Table 7.

In the case 1.2, when a UPF receives a data packet whose destination address is an address of a terminal, if address information of the terminal indicates that the terminal is a terminal served by the UPF, the UPF sends the data packet to the terminal via a RAN node accessed by the terminal. If the address information of the terminal indicates that the terminal is a terminal served by the another UPF, the UPF sends the data packet to the transit device. If the UPF does not know the address information of the terminal (that is, the terminal is neither a terminal served by the UPF nor a terminal served by the another UPF), the data packet may be discarded.

### Scenario 2 in which a quantity of UPFs in the 5GVN reaches N:

A value of N may be preconfigured, specified in a protocol, or determined through negotiation by the SMF and the UPF. This is not limited in this application.

In the scenario 2, step 501 may include the following step 501-21 to step 501-24 during specific implementation.

501-21: The SMF receives a session establishment request sent by a third terminal in the group, where the session establishment request is used to request to establish a session to access the 5GVN service.

501-22: The SMF selects a second UPF for a session of the third terminal.

501-23: The SMF determines whether a quantity of UPFs that provide the 5GVN service for the group reaches N, where N is an integer greater than 1.

501-24: If the quantity reaches N, the SMF determines the transit device that provides the 5GVN service for the group; and if the quantity does not reach N, the SMF performs a subsequent procedure according to an existing solution.

In the scenario 2, before the quantity of UPFs in the 5GVN reaches N, an architecture of the 5GVN may be a full mesh architecture, and after the quantity reaches N, the architecture of the 5GVN is a star topology architecture.

In the scenario 2, the transit device may be one of N UPFs that provide the 5GVN service for the group (denoted as case one). Alternatively, the transit device may be a device other than N UPFs that provide the 5GVN service for the group (denoted as case two). The following describes the method provided in this application in the case one and case two.

Case one: The transit device is one of the N UPFs that provide the 5GVN service for the group.

In the case one, the first forwarding rule includes forwarding information of N-1 UPFs and forwarding information of terminals served by the N-1 UPFs. The N-1 UPFs are UPFs other than the transit device in the N UPFs that provide the 5GVN service for the group. The forwarding information of N-1 UPFs and the forwarding information of terminals served by the N-1 UPFs may be carried in one message, or may be carried in two different messages. If the forwarding information of N-1 UPFs and the forwarding information of terminals served by the N-1 UPFs are carried in one message, for example, both the forwarding information of N-1 UPFs and the forwarding information of terminals served by the N-1 UPFs may be carried in a session establishment request or a session update request.

It should be noted that, in the case one, because the transit device is one of the N UPFs that provide the 5GVN service for the group, the transit device has already stored information about another UPF and terminals served by the another UPF. Therefore, step 502 may not be performed.

The SMF configures a forwarding rule for only the transit device in step 502. This can only ensure that the transit device correctly sends a data packet destined for a terminal to a UPF serving the terminal. A forwarding rule further needs to be configured for the UPF, to ensure that the UPF correctly forwards data. The following describes a process of configuring a forwarding rule for the UPF by using a case 2.1 and a case 2.2.

Case 2.1: The UPF needs to know forwarding information of the transit device and forwarding information of a terminal served by the UPF, to forward data.

In the case 2.1, optionally, the method further includes: The SMF sends an update request to the N-1 UPFs, where the update request is used to request a corresponding UPF to update a forwarding rule.

An update request sent to a UPF includes a second forwarding rule, the second forwarding rule includes the forwarding information of the transit device, and the second forwarding rule is used by the UPF to forward a data packet whose destination address is not an address of a terminal served by the UPF to the transit device.

The update request may be a session establishment request or a session update request.

In the case 2.1, when a UPF receives a data packet whose destination address is an address of a terminal, if address information of the terminal indicates that the terminal is a terminal served by the UPF, the UPF sends the data packet to the terminal via a RAN node accessed by the terminal. If the address information of the terminal indicates that the terminal is not a terminal served by the UPF, the UPF sends the data packet to the transit device.

In the case 2.1, if the SMF subsequently receives a session establishment request sent by another terminal, the method may further include other steps. For details, refer to the foregoing step (11) to step (13).

Case 2.2: The UPF needs to know forwarding information of the transit device and forwarding information of a terminal served by another UPF other than the UPF, to forward data.

In the case 2.2, optionally, the method further includes: The SMF sends an update request to the N-1 UPFs, where the update request is used to request a corresponding UPF to update a forwarding rule.

An update request sent to a UPF includes a second forwarding rule, the second forwarding rule includes the forwarding information of the transit device and the forwarding information of the terminal served by the another UPF other than the UPF, and the second forwarding rule is used by the UPF to forward a data packet whose destination address is an address of the terminal served by the another UPF other than the UPF to the transit device.

The update request may be a session establishment request or a session update request.

In the case 2.2, when a UPF receives a data packet whose destination address is an address of a terminal, if address information of the terminal indicates that the terminal is a terminal served by the UPF, the UPF sends the data packet to the terminal via a RAN node accessed by the terminal. If the address information of the terminal indicates that the terminal is a terminal served by the another UPF, the UPF sends the data packet to the transit device. If the UPF does not know the address information of the terminal (that is, the terminal is neither a terminal served by the UPF nor a terminal served by the another UPF), the data packet may be discarded.

In the case 2.2, if the SMF subsequently receives a session establishment request sent by another terminal, the method may further include other steps. For details, refer to the foregoing step (21) to step (24).

Case two: The transit device is a device other than N UPFs that provide the 5GVN service for the group.

In the case two, the transit device may be another UPF other than the N UPFs, or may be a router, a switch, or another device that have a forwarding function.

In the case two, the first forwarding rule includes forwarding information of the N UPFs and forwarding information of terminals served by the N UPFs.

The forwarding information of N UPFs and the forwarding information of terminals served by the N UPFs may be carried in one message, or may be carried in two different messages. If the forwarding information of N UPFs and the forwarding information of terminals served by the N UPFs are carried in one message, for example, both the forwarding information of N UPFs and the forwarding information of terminals served by the N UPFs may be carried in a session establishment request or a session update request.

The SMF configures a forwarding rule for only the transit device in step 502. This can only ensure that the transit device correctly sends a data packet destined for a terminal to a UPF serving the terminal. A forwarding rule further needs to be configured for the UPF, to ensure that the UPF correctly forwards data. The following describes a process of configuring a forwarding rule for the UPF by using a case 2.3 and a case 2.4.

Case 2.3: The UPF needs to know forwarding information of the transit device and forwarding information of a terminal served by the UPF, to forward data.

In the case 2.3, optionally, the method further includes: The SMF sends an update request to each of the N UPFs, where the update request is used to request a corresponding UPF to update a forwarding rule.

An update request sent to a UPF includes a second forwarding rule, the second forwarding rule includes the forwarding information of the transit device, and the second forwarding rule is used by the UPF to forward a data packet whose destination address is not an address of a terminal served by the UPF to the transit device.

The update request may be a session establishment request or a session update request.

In the case 2.3, when a UPF receives a data packet whose destination address is an address of a terminal, if address information of the terminal indicates that the terminal is a terminal served by the UPF, the UPF sends the data packet to the terminal via a RAN node accessed by the terminal. If the address information of the terminal indicates that the terminal is not a terminal served by the UPF, the UPF sends the data packet to the transit device.

In the case 2.3, if the SMF subsequently receives a session establishment request sent by another terminal, the method may further include other steps. For details, refer to the foregoing step (11) to step (13).

Case 2.4: The UPF needs to know forwarding information of the transit device and forwarding information of a terminal served by another UPF other than the UPF, to forward data.

In the case 2.4, optionally, the method further includes: The SMF sends an update request to each of the N UPFs, where the update request is used to request a corresponding UPF to update a forwarding rule.

An update request sent to a UPF includes a second forwarding rule, the second forwarding rule includes the forwarding information of the transit device and the forwarding information of the terminal served by the another UPF other than the UPF, and the second forwarding rule is used by the UPF to forward a data packet whose destination address is an address of the terminal served by the another UPF other than the UPF to the transit device.

The update request may be a session establishment request or a session update request.

In the case 2.4, when a UPF receives a data packet whose destination address is an address of a terminal, if address information of the terminal indicates that the terminal is a terminal served by the UPF, the UPF sends the data packet to the terminal via a RAN node accessed by the terminal. If the address information of the terminal indicates that the terminal is a terminal served by the another UPF, the UPF sends the data packet to the transit device. If the UPF does not know the address information of the terminal (that is, the terminal is neither a terminal served by the UPF nor a terminal served by the another UPF), the data packet may be discarded.

In the case 2.4, if the SMF subsequently receives a session establishment request sent by another terminal, the method may further include other steps. For details, refer to the foregoing step (21) to step (24).

In the foregoing embodiments, each time the SMF selects a new UPF for the group, the SMF establishes a transmission path between the UPF and the transit device. When the transit device is a UPF, the transmission path between the UPF and transit device is an N19 tunnel. When the transit device is not a UPF, the transmission path between the UPF and transit device is an N6 tunnel.

In addition, the SMF further establishes an N3 tunnel between a UPF and a RAN node for a terminal, and establishes or configures a forwarding rule on the UPF: A data packet whose destination address is an address of the terminal is sent to the RAN node through the N3 tunnel corresponding to the terminal. For content of this part, refer to the conventional technology. Details are not described in this application.

The method provided in the foregoing embodiments is described below by using examples of an embodiment 1 and an embodiment 2.

### Embodiment 1

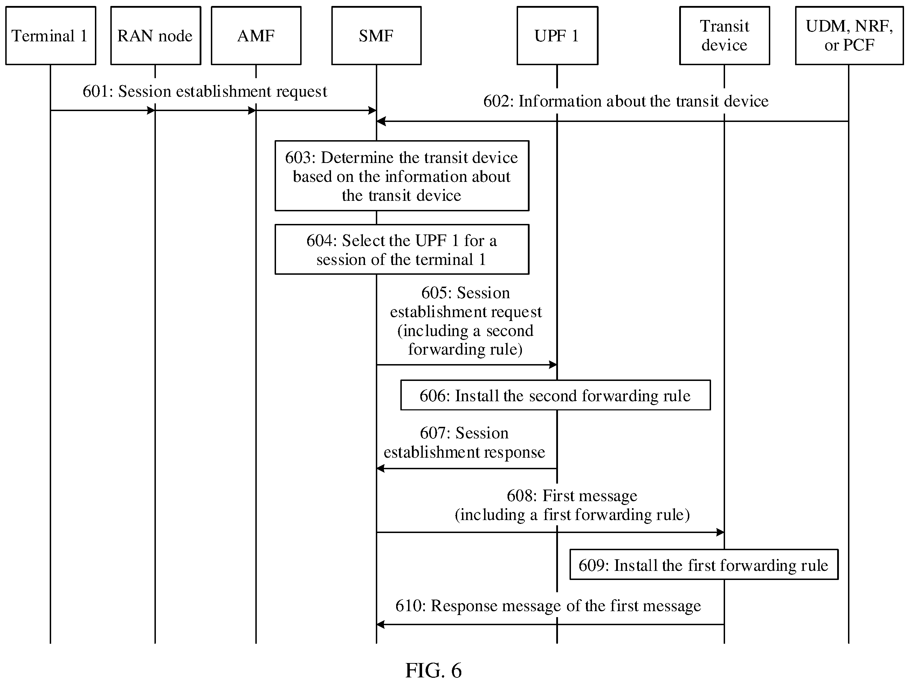

In the embodiment 1, a 5GVN uses a star topology architecture in initial networking. As shown in FIG. 6, the method includes the following steps.

601: A terminal (denoted as a terminal 1) sends a session establishment request to an SMF.

The session establishment request is used to request to establish a session to access a 5GVN service. For information included in the session establishment request sent by the terminal 1, refer to the foregoing description. Details are not described again.

The terminal 1 may send the session establishment request to the SMF via an AMF. The AMF may determine the SMF (the SMF manages a 5GVN identified by a 5GVN identifier) based on the 5GVN identifier in the received session establishment request, and sends the session establishment request to the SMF.

Further, the terminal 1 may send the session establishment request to the AMF via a RAN node.

602: The SMF obtains information about a transit device.

The information about the transit device may be configured on the SMF. In this case, the SMF directly obtains the information about the transit device. The information about the transit device may alternatively be configured on a UDM, an NRF, or a PCF. In this case, the SMF may obtain the information about the transit device from the UDM, the NRF, or the PCF. FIG. 6 is drawn by using an example in which the SMF obtains the information about the transit device from the UDM, the NRF, or the PCF.

603: The SMF determines the transit device based on the information about the transit device.

A UPF 1 and the transit device may be a same device or may be different devices. This is not limited in this application.

604: The SMF selects a UPF (assumed as the UPF 1) for a session of the terminal 1.

In step 602, in a process of obtaining the information about the transit device, the SMF may further obtain one or more of subscription data (from the UDM), policy information (from the PCF), and other information (from the NRF) of the terminal 1. In this case, during specific implementation of step 604, the SMF may select a UPF for the session of the terminal 1 based on one or more of a location, the subscription data, the policy information, and the other information of the terminal 1.

605: The SMF sends a session establishment request to the UPF 1. Correspondingly, the UPF 1 receives the session establishment request.

The session establishment request is used to request the UPF 1 to create a session. The session establishment request may include a second forwarding rule, the second forwarding rule includes forwarding information of the transit device, and the second forwarding rule is used by the UPF 1 to forward a data packet whose destination address is not an address of a terminal served by the UPF 1 to the transit device.

Optionally, the session establishment request includes the forwarding information of the transit device.

606: The UPF 1 installs the second forwarding rule based on the session establishment request.

After installing the second forwarding rule, when subsequently receiving a data packet, the UPF 1 forwards the data packet whose destination address is not the address of the terminal served by the UPF 1 to the transit device.

Optionally, if the session establishment request includes the forwarding information of the transit device, the UPF 1 establishes a path between the UPF 1 and the transit device based on the forwarding information of the transit device.

607: The UPF 1 sends a session establishment response to the SMF.

Optionally, if the transit device is a UPF and tunnel information of the transit device is allocated by the transit device, the session establishment response may include tunnel information of the UPF 1.

608: The SMF sends a first message to the transit device, where the first message is used to send forwarding information of the UPF 1 and/or forwarding information of the terminal 1 to the transit device. Correspondingly, the transit device receives the first message.

The first message may include a first forwarding rule, and the first forwarding rule includes the forwarding information of the terminal 1 and/or the forwarding information of the UPF 1. The first forwarding rule is used by the transit device to send a data packet whose destination address is an address of the terminal 1 to the UPF 1.

Optionally, if the transit device is a UPF, the first message may be a session establishment request or a session update request, the forwarding information of the UPF 1 includes tunnel information and/or an IP address of the UPF 1, and the first forwarding rule may be an N4 rule. If the transit device is a router, a switch, or another device that have a forwarding function in a data network (data network, DN), the SMF may directly send the first message to the transit device, or may send the first message to the transit device via another network function entity (for example, an AF or an NEF). The first forwarding rule may be N6 traffic routing information. The N6 traffic routing information may indicate any tunnelling that may be used over N6, and the nature of the information depends on deployment. For example, the N6 traffic routing information may include an IP address and a UDP port number.

609: The transit device installs the first forwarding rule in the first message.

After installing the first forwarding rule, the transit device sends the data packet whose destination address is the address of the terminal 1 to the UPF 1.

Optionally, if the first message further includes the tunnel information of the UPF 1, the transit device establishes a path between the transit device and the UPF 1 based on the tunnel information of the UPF 1.

610: The transit device sends a response message of the first message to the SMF.

It should be noted that step 605 (the SMF sends the session establishment request to the UPF 1) and step 608 (the SMF sends the first message to the transit device) may be decoupled from a session establishment procedure, that is, may not be performed in the session establishment procedure, and may be performed after the session establishment procedure is completed.

### Embodiment 2

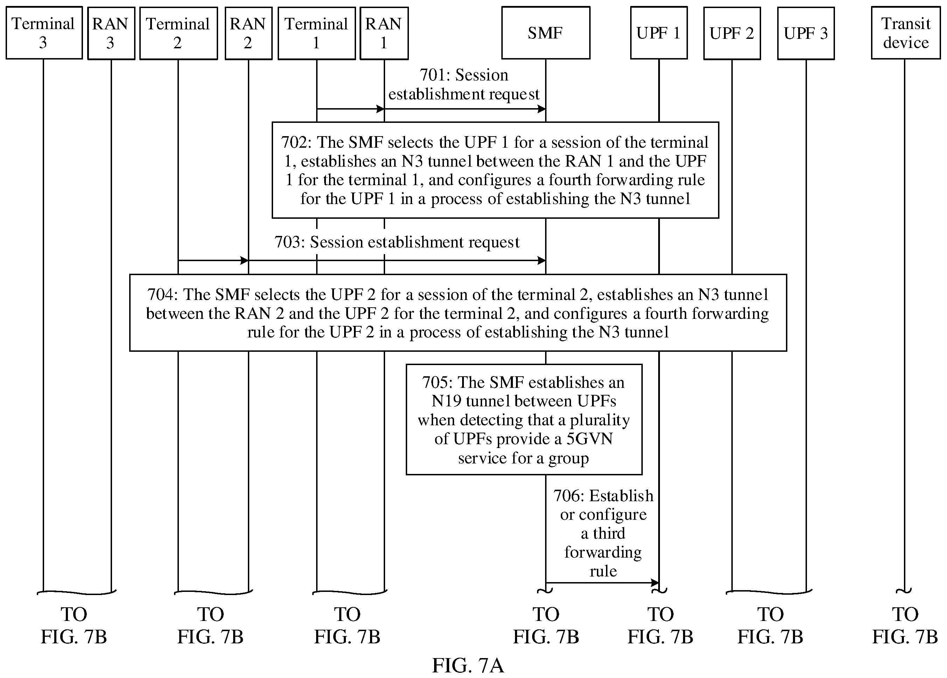

A difference from the embodiment 1 lies in that a 5GVN does not use a star topology architecture in initial networking, but adjusts a full mesh architecture to the star topology architecture when a quantity of UPFs in the 5GVN is greater than or equal to a threshold (assumed as 3). As shown in FIG. 7A to FIG. 7D, the method includes the following steps.

701: A terminal 1 in a group sends a session establishment request to an SMF. Correspondingly, the SMF receives the session establishment request from the terminal 1.

For related descriptions of step 701 and other similar steps in the embodiment 2, refer to step 601. Details are not described again.

702: The SMF selects a UPF 1 for a session of the terminal 1 based on the session establishment request sent by the terminal 1, establishes an N3 tunnel between a RAN 1 (a RAN node accessed by the terminal 1) and the UPF 1 for the terminal 1, and configures a fourth forwarding rule for the UPF 1 in a process of establishing the N3 tunnel, where the fourth forwarding rule is used by the UPF 1 to send a data packet whose destination address is an address of the terminal 1 to the RAN 1 through the corresponding N3 tunnel.

703: A terminal 2 in the group sends a session establishment request to the SMF. Correspondingly, the SMF receives the session establishment request from the terminal 2.

704: The SMF selects a UPF 2 for a session of the terminal 2 based on the session establishment request sent by the terminal 2, establishes an N3 tunnel between a RAN 2 (a RAN node accessed by the terminal 2) and the UPF 2 for the terminal 2, and configures a fourth forwarding rule for the UPF 2 in a process of establishing the N3 tunnel, where the fourth forwarding rule is used by the UPF 2 to send a data packet whose destination address is an address of the terminal 2 to the RAN 2 through the corresponding N3 tunnel.

705: The SMF establishes an N19 tunnel between UPFs (that is, between the UPF 1 and the UPF 2) when detecting that a plurality of UPFs provide a 5GVN service for the group.

During specific implementation, step 705 may include: The SMF sends tunnel information of the UPF 2 to the UPF 1, and sends tunnel information of the UPF 1 to the UPF 2. The tunnel information of the UPF 1 may be allocated by the SMF or the UPF 1, and if the tunnel information of the UPF 1 is allocated by the UPF 1, the UPF 1 may send the tunnel information of the UPF 1 to the SMF in the process in which the SMF establishes the N3 tunnel between the RAN 1 and the UPF 1 for the terminal 1. Similarly, the tunnel information of the UPF 2 may be allocated by the SMF or the UPF 2, and if the tunnel information of the UPF 2 is allocated by the UPF 2, the UPF 2 may send the tunnel information of the UPF 2 to the SMF in the process in which the SMF establishes the N3 tunnel between the RAN 2 and the UPF 2 for the terminal 2.

706: The SMF establishes or configures a third forwarding rule for the UPF 1. Correspondingly, the UPF 1 installs the third forwarding rule.

The third forwarding rule is used by the UPF 1 to send a data packet whose destination address is the address of the terminal 2 to the UPF 2 through the N19 tunnel between the UPF 1 and the UPF 2. The third forwarding rule may include address information of the terminal 2 and the tunnel information of the UPF 2.

The third forwarding rule may be carried in a session establishment request or a session update request.

707: The SMF establishes or configures a third forwarding rule for the UPF 2. Correspondingly, the UPF 2 installs the third forwarding rule.

The third forwarding rule is used by the UPF 2 to send a data packet whose destination address is the address of the terminal 1 to the UPF 1 through the N19 tunnel between the UPF 2 and the UPF 1. The third forwarding rule may include address information of the terminal 1 and the tunnel information of the UPF 1.

The third forwarding rule may be carried in a session establishment request or a session update request.

708: A terminal 3 in the group sends a session establishment request to the SMF. Correspondingly, the SMF receives the session establishment request from the terminal 3.

709: The SMF selects a UPF 3 for a session of the terminal 3 based on the session establishment request sent by the terminal 3, establishes an N3 tunnel between a RAN 3 (a RAN node accessed by the terminal 3) and the UPF 3 for the terminal 3, and configures a fourth forwarding rule for the UPF 3 in a process of establishing the N3 tunnel, where the fourth forwarding rule is used by the UPF 3 to send a data packet whose destination address is an address of the terminal 3 to the RAN 3 through the corresponding N3 tunnel.

Tunnel information of the UPF 3 may be allocated by the SMF or the UPF 3, and if the tunnel information of the UPF 3 is allocated by the UPF 3, the UPF 3 may send the tunnel information of the UPF 3 to the SMF in the process in which the SMF establishes the N3 tunnel between the RAN 3 and the UPF 3 for the terminal 3.

710: The SMF determines that a quantity of UPFs providing the 5GVN service for the group reaches 3, and determines a transit device that provides the 5GVN service for the group.

It should be noted that, each time the SMF selects a new UPF for the group, the SMF may determine whether the quantity of UPFs providing the 5GVN service for the group reaches 3. If the quantity does not reach 3, no operation is performed. If the quantity reaches 3, the SMF determines the transit device.

In step 710, if the quantity of UPFs that provide the 5GVN service for the group reaches 3, the SMF determines that the 5GVN uses the star topology architecture, and further determines the transit device.

In the embodiment 2, it is assumed that the transit device is a router, a switch, or a UPF other than UPFs that currently provide the 5GVN service for the group.

711: The SMF sends a first message to the transit device, where the first message is used to send forwarding information of the UPF 1, the UPF 2, and the UPF 3 and forwarding information of terminals served by the UPF 1, the UPF 2, and the UPF 3 to the transit device. Correspondingly, the transit device receives the first message.

The first message may include a first forwarding rule, and the first forwarding rule includes the forwarding information of the UPF 1, the UPF 2, and the UPF 3 and the forwarding information of terminals served by the UPF 1, the UPF 2, and the UPF 3. The first forwarding rule is used by the transit device to forward a data packet whose destination address is an address of a terminal served by a UPF to the UPF.

Optionally, if the transit device is a UPF, the first message may be a session establishment request or a session update request, forwarding information of a UPF includes tunnel information and/or an IP address of the UPF, and the first forwarding rule may be an N4 rule. If the transit device is a router, a switch, or another device that have a forwarding function in a DN, the SMF may directly send the first message to the transit device, or may send the first message to the transit device via another network function entity (for example, an AF or an NEF). The first forwarding rule may be N6 traffic routing information. The N6 traffic routing information may indicate any tunnelling that may be used over N6, and the nature of the information depends on deployment. For example, the N6 traffic routing information may include an IP address and a UDP port number.

712: The transit device installs the first forwarding rule in the first message.

After installing the first forwarding rule, the transit device forwards a received data packet whose destination address is an address of a terminal served by a UPF to the UPF.

713: The transit device sends a response message of the first message to the SMF.

714: The SMF sends a session update request or a session establishment request to the UPF 1, the UPF 2, and the UPF 3. Correspondingly, the UPF 1, the UPF 2, and the UPF 3 receive the session update request or the session establishment request.

The session update request or the session establishment request includes a second forwarding rule, and the second forwarding rule includes forwarding information of the transit device. The second forwarding rule is used by a UPF to forward a data packet whose destination address is not an address of a terminal served by the UPF to the transit device.

It should be noted that, if tunnel information of a UPF is allocated by the SMF, when sending, to the UPF, the tunnel information allocated to the UPF, the SMF may also send the second forwarding rule to the UPF. In other words, the second forwarding rule and the tunnel information of the UPF may be carried in one message.

715: The UPF 1, the UPF 2, and the UPF 3 update the third forwarding rule to the second forwarding rule based on the session update request or the session establishment request.

After updating the third forwarding rule to the second forwarding rule, when subsequently receiving a data packet, a UPF forwards the data packet whose destination address is not an address of a terminal served by the UPF to the transit device.

716: The UPF 1, the UPF 2, and the UPF 3 send a session establishment response or a session update response to the SMF.

The 5GVN of the full mesh architecture may be adjusted to the 5GVN of the star topology architecture by using the step 701 to step 716.

It should be noted that step 711 (the SMF sends the first message to the transit device) and step 710 (the SMF sends the session update request or the session establishment request to the UPF 1, the UPF 2, and the UPF 3) may be decoupled from the session establishment procedure, that is, may not be performed in the session establishment procedure, and may be performed after the session establishment procedure is completed.

An embodiment of this application further provides a communication system, including: an SMF that provides a 5GVN service for a group, a UPF that provides the 5GVN service for the group, and a transit device that provides the 5GVN service for the group.

The SMF is configured to: in a process of creating a session for a terminal in the group, send a first forwarding rule to the transit device and send a second forwarding rule to the UPF, where the first forwarding rule is used by the transit device to forward a data packet whose destination address is an address of a terminal served by a UPF to the UPF, and the second forwarding rule sent to the UPF is used by the UPF to forward a data packet whose destination address is not an address of a terminal served by the UPF to the transit device.

The transit device is configured to: receive the first forwarding rule and install the first forwarding rule.

The UPF is configured to: receive the second forwarding rule and install the second forwarding rule.

Optionally, the transit device is determined by the SMF for the group when a quantity of UPFs that provide the 5GVN service for the group reaches N.

The SMF is specifically configured to send the second forwarding rule to the UPF after determining the transit device for the group.

The UPF is specifically configured to receive the second forwarding rule, and update a forwarding rule in the UPF to the second forwarding rule.

The UPF may update a third forwarding rule in the UPF to the second forwarding rule, and the third forwarding rule is used by the UPF to forward a data packet whose destination address is an address of a terminal served by another UPF to the corresponding UPF.

Optionally, the first forwarding rule includes forwarding information of at least one UPF and forwarding information of at least one terminal served by the at least one UPF.

Optionally, the transit device is one of N UPFs that provide the 5GVN service for the group, and the first forwarding rule includes forwarding information of N-1 UPFs and forwarding information of terminals served by the N-1 UPFs. The N-1 UPFs are UPFs other than the transit device in the N UPFs that provide the 5GVN service for the group.

Optionally, the transit device is a device other than N UPFs that provide the 5GVN service for the group, and the first forwarding rule includes forwarding information of the N UPFs and forwarding information of terminals served by the N UPFs.

Optionally, the second forwarding rule includes forwarding information of the transit device. For specific implementation of actions performed by each network element in the communication system, refer to the foregoing embodiments. Details are not described herein again.

In the foregoing embodiments, for ease of description, embodiments of this application use an example in which the provided method is applied to a 5G system. During actual implementation, the method may be further applied to an evolved packet system (evolved packet system, EPS). In this case, the foregoing network elements only need to be replaced with network elements having corresponding functions in the EPS, and the foregoing session may be a PDN connection in the EPS. The PDN connection refers to an IP connection provided by an EPS network between a terminal and an external public data network (public data network, PDN) of a PLMN.

It should be noted that steps performed by the SMF in the method provided in embodiments of this application may alternatively be performed by a chip applied to the SMF. Steps performed by the transit device may alternatively be performed by a chip applied to the transit device. Steps performed by the UPF may alternatively be performed by a chip applied to the UPF.

It should be noted that in embodiments of this application, names of messages between network elements, names of parameters in messages, or the like are merely examples, and there may be other names during specific implementation. This is not specifically limited in embodiments of this application.

It should be noted that mutual reference may be made between embodiments of this application. For example, for same or similar steps, mutual reference may be made between the method embodiments, the communication system embodiments, and the apparatus embodiments. This is not limited.

The foregoing mainly describes the solutions in embodiments of this application from a perspective of interaction between network elements. It may be understood that, to implement the foregoing functions, the network elements, such as the SMF, the transit device, and the UPF, include a corresponding hardware structure and/or software module that is used to perform each function. A person skilled in the art may be easily aware that, units and algorithm steps of each example described in combination with embodiments disclosed in the specification may be implemented by hardware, or a combination of hardware and computer software. Whether a specific function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the SMF, the transit device, and the UPF may be divided into functional units based on the foregoing method examples. For example, each functional unit may be obtained through division based on each corresponding function, or two or more functions may be integrated into one processing unit. The integrated unit may be implemented in a form of hardware, or may be implemented in a form of a software functional unit. It should be noted that, in embodiments of this application, division into units is an example, and is merely logical function division. During actual implementation, another division manner may be used.

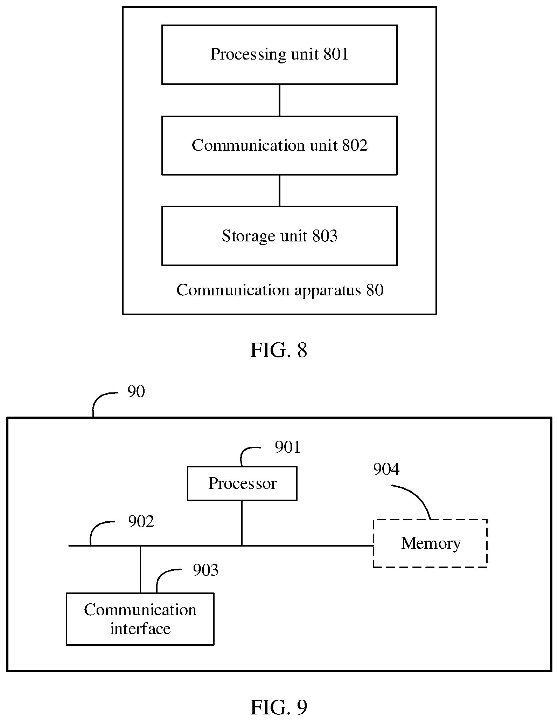

When an integrated unit is used, FIG. 8 shows a communication apparatus 80 in embodiments. The communication apparatus 80 may include a processing unit 801 and a communication unit 802. Optionally, a storage unit 803 is further included.

For example, the communication apparatus 80 is an SMF, or is a chip applied to the SMF. In this case, the processing unit 801 is configured to support the communication apparatus 80 in performing step 501 and step 502 in FIG. 5, step 601 to step 605, step 607, step 608, and step 610 in FIG. 6, step 701 to step 711, step 713, step 714, and step 716 in FIG. 7A to FIG. 7D, and/or some or all of actions performed by the SMF in another process described in embodiments of this application. The communication unit 802 is configured to communicate with another network entity, for example, communicate with the transit device shown in FIG. 5. The storage unit 803 is configured to store program code and data of the SMF.

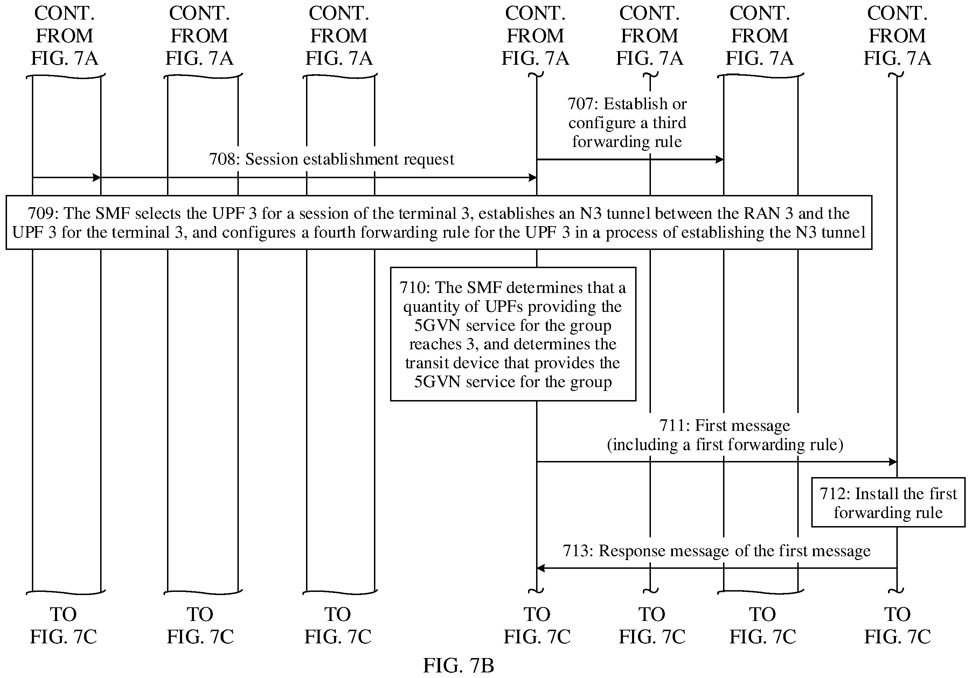

For another example, the communication apparatus 80 is a transit device, or is a chip applied to the transit device. In this case, the processing unit 801 is configured to support the communication apparatus 80 in performing step 502 in FIG. 5, step 608 to step 610 in FIG. 6, step 711 to step 713 in FIG. 7B, and/or some or all of actions performed by the transit device in another process described in embodiments of this application. The communication unit 802 is configured to communicate with another network entity, for example, communicate with the SMF shown in FIG. 5. The storage unit 803 is configured to store program code and data of the transit device.

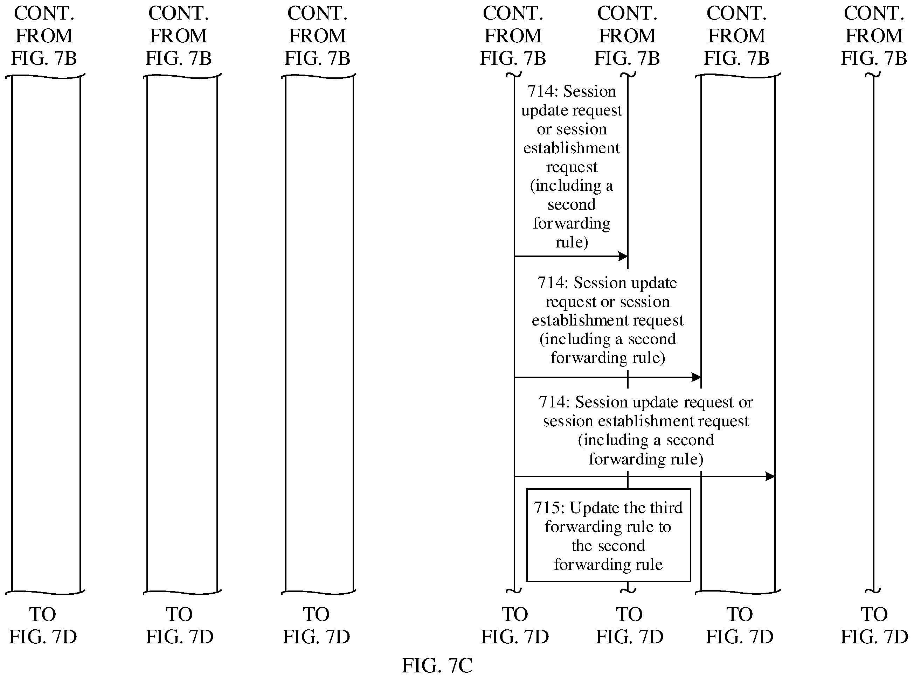

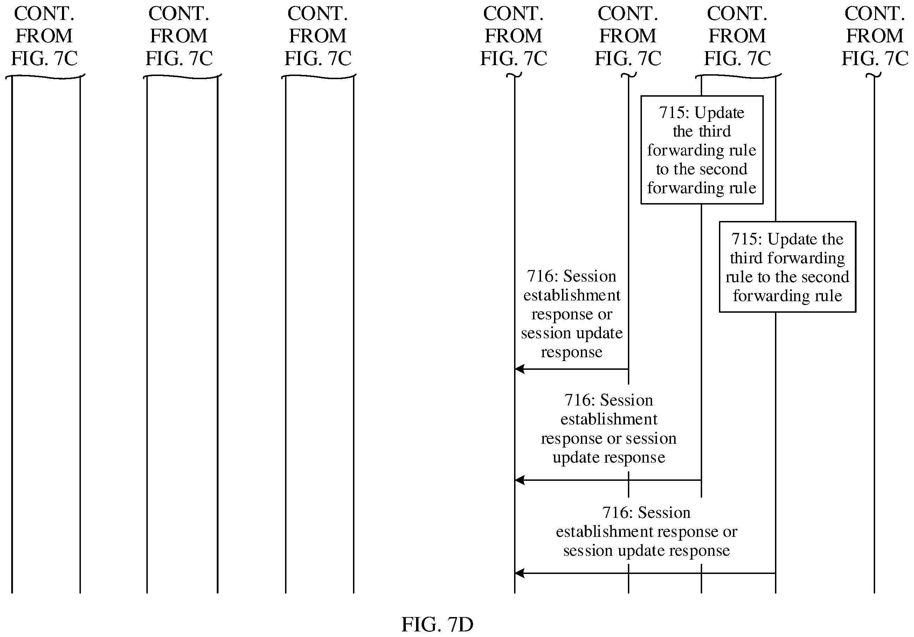

For still another example, the communication apparatus 80 is a UPF, or is a chip applied to the UPF. In this case, the processing unit 801 is configured to support the communication apparatus 80 in performing step 605 to step 607 (in this case, the UPF is the UPF 1) in FIG. 6, step 702, step 706, and step 714 to step 716 (in this case, the UPF is the UPF 1) in FIG. 7A, FIG. 7C, and FIG. 7D, step 704, step 707, and step 714 to step 716 (in this case, the UPF is the UPF 2) in FIG. 7A to FIG. 7D, step 706 and step 714 to step 716 (in this case, the UPF is the UPF 3) in FIG. 7A, FIG. 7C, and FIG. 7D, and/or some or all of actions performed by the UPF in another process described in embodiments of this application. The communication unit 802 is configured to communicate with another network entity, for example, communicate with the SMF shown in FIG. 6 or FIG. 7A to FIG. 7D. The storage unit 803 is configured to store program code and data of the UPF.

When the integrated unit in FIG. 8 is implemented in a form of a software functional module and sold or used as an independent product, the integrated unit may be stored in a computer-readable storage medium. Based on such an understanding, the technical solutions of embodiments of this application essentially, or the part contributing to the conventional technology, or all or a part of the technical solutions may be implemented in the form of a software product. The computer software product is stored in a storage medium, and includes several instructions for instructing a computer device (which may be a personal computer, a server, or a network device) or a processor (processor) to perform all or some of the steps of the methods described in embodiments of this application. The storage medium that stores the computer software product includes any medium that can store program code, such as a USB flash drive, a removable hard disk, a read-only memory (read-only memory, ROM), a random access memory (random access memory, RAM), a magnetic disk, or an optical disc.

The unit in FIG. 8 may alternatively be referred to as a module. For example, the processing unit may be referred to as a processing module.

FIG. 9 is a schematic diagram of a hardware structure of a communication apparatus 90 according to an example to understand this application. The communication apparatus 90 includes one or more processors 901 and a communication interface 903.

Optionally, the communication apparatus 90 further includes a memory 904. The memory 904 may include a read-only memory and a random access memory, and provides operation instructions and data for the processor 901. A part of the memory 904 may further include a nonvolatile random access memory (non-volatile random access memory, NVRAM).

In some implementations, the memory 904 stores the following elements: an executable module or a data structure, a subset thereof, or an extended set thereof.

In this example, a corresponding operation is performed by invoking the operation instructions (the operation instructions may be stored in an operating system) stored in the memory 904.

In a possible implementation, structures used by a transit device, an SMF, and a UPF are similar, and different apparatuses may use different structures to implement respective functions.

The processor 901 controls a processing operation of any one of the transit device, the SMF, and the UPF. The processor 901 may also be referred to as a central processing unit (central processing unit, CPU).

The processor 901, the communication interface 903, and the memory 904 are coupled together through a bus system 902. In addition to a data bus, the bus system 902 may further include a power bus, a control bus, a status signal bus, and the like. However, for clear descriptions, various buses are marked as the bus system 902 in FIG. 9.

The methods disclosed in the foregoing embodiments of this application may be applied to the processor 901, or may be implemented by the processor 901. The processor 901 may be an integrated circuit chip and has a signal processing capability. In an implementation process, the steps in the foregoing methods may be completed by means of an integrated logic circuit of hardware in the processor 901 or an instruction in a form of software. The processor 901 may be a general-purpose processor, a digital signal processor (digital signal processor, DSP), an application-specific integrated circuit (application-specific integrated circuit, ASIC), a field programmable gate array (field-programmable gate array, FPGA) or another programmable logic device, a discrete gate or a transistor logic device, or a discrete hardware component. The processor 901 may implement or perform methods, steps, and logical block diagrams disclosed in embodiments of this application. The general-purpose processor may be a microprocessor, or the processor may be any conventional processor, or the like. Steps of the methods disclosed with reference to embodiments of this application may be directly executed and accomplished by means of a hardware decoding processor, or may be executed and accomplished by using a combination of hardware and software modules in the decoding processor. The software module may be located in a mature storage medium in the art, such as a random access memory, a flash memory, a read-only memory, a programmable read-only memory, an electrically erasable programmable memory, or a register. The storage medium is in the memory 904, and the processor 901 reads information in the memory 904 and completes the steps in the foregoing methods in combination with hardware of the processor.

In a possible implementation, the processor 901 controls the communication interface 903 to perform the steps of receiving and sending of the transit device, the SMF, and the UPF in embodiments shown in FIG. 5 to FIG. 7D. The processor 901 is configured to perform processing steps of the transit device, the SMF, and the UPF in embodiments shown in FIG. 5 to FIG. 7D.

The foregoing communication unit or communication interface may be an interface circuit or communication interface of the apparatus, configured to receive a signal from another apparatus. For example, when the apparatus is implemented in a form of a chip, the communication unit or the communication interface is an interface circuit or communication interface used by the chip to receive a signal or send a signal from another chip or apparatus.

In the foregoing examples, the instructions that are stored in the memory and that are to be executed by the processor may be implemented in a form of a computer program product. The computer program product may be written into the memory in advance, or may be downloaded and installed in the memory in a form of software.

The computer program product includes one or more computer instructions. When the computer program instructions are loaded and executed on a computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

According to one aspect, a computer-readable storage medium is provided, and the computer-readable storage medium stores instructions. When the instructions are run, an SMF or a chip applied to the SMF performs step 501 and step 502 in FIG. 5, step 601 to step 605, step 607, step 608, and step 610 in FIG. 6, step 701 to step 711, step 713, step 714, and step 716 in FIG. 7A to FIG. 7D, and/or some or all of actions performed by the SMF in another process described in embodiments of this application.

According to another aspect, a computer-readable storage medium is provided, and the computer-readable storage medium stores instructions. When the instructions are run, a transit device or a chip applied to the transit device performs step 502 in FIG. 5, step 608 to step 610 in FIG. 6, step 711 to step 713 in FIG. 7B, and/or some or all of actions performed by the transit device in another process described in embodiments of this application.

According to still another aspect, a computer-readable storage medium is provided, and the computer-readable storage medium stores instructions. When the instructions are run, a UPF or a chip applied to the UPF performs step 605 to step 607 (in this case, the UPF is the UPF 1) in FIG. 6, step 702, step 706, and step 714 to step 716 (in this case, the UPF is the UPF 1) in FIG. 7A, FIG. 7C, and FIG. 7D, step 704, step 707, and step 714 to step 716 (in this case, the UPF is the UPF 2) in FIG. 7A to FIG. 7D, step 706 and step 714 to step 716 (in this case, the UPF is the UPF 3) in FIG. 7A, FIG. 7C, and FIG. 7D, and/or some or all of actions performed by the UPF in another process described in embodiments of this application.

The foregoing readable storage medium may include any medium that can store program code, such as a USB flash drive, a removable hard disk, a read-only memory, a random access memory, a magnetic disk, or an optical disc.

According to one example to understand this application, a computer program product including instructions is provided, and the computer program product stores the instructions. When the instructions are run, an SMF or a chip applied to the SMF performs step 501 and step 502 in FIG. 5, step 601 to step 605, step 607, step 608, and step 610 in FIG. 6, step 701 to step 711, step 713, step 714, and step 716 in FIG. 7A to FIG. 7D, and/or some or all of actions performed by the SMF in another process described in embodiments of this application.

According to another example to understand this application, a computer program product including instructions is provided, and the computer program product stores the instructions. When the instructions are run, a transit device or a chip applied to the transit device performs step 502 in FIG. 5, step 608 to step 610 in FIG. 6, step 711 to step 713 in FIG. 7B, and/or some or all of actions performed by the transit device in another process described in embodiments of this application.

According to still another example to understand this application, a computer program product including instructions is provided, and the computer program product stores the instructions. When the instructions are run, a UPF or a chip applied to the UPF performs step 605 to step 607 (in this case, the UPF is the UPF 1) in FIG. 6, step 702, step 706, and step 714 to step 716 (in this case, the UPF is the UPF 1) in FIG. 7A, FIG. 7C, and FIG. 7D, step 704, step 707, and step 714 to step 716 (in this case, the UPF is the UPF 2) in FIG. 7A to FIG. 7D, step 706 and step 714 to step 716 (in this case, the UPF is the UPF 3) in FIG. 7A, FIG. 7C, and FIG. 7D, and/or some or all of actions performed by the UPF in another process described in embodiments of this application.

According to one example to understand this application, a chip is provided, and the chip is applied to an SMF. The chip includes at least one processor and a communication interface, the communication interface is coupled to the at least one processor, and the processor is configured to run instructions to perform step 501 and step 502 in FIG. 5, step 601 to step 605, step 607, step 608, and step 610 in FIG. 6, step 701 to step 711, step 713, step 714, and step 716 in FIG. 7A to FIG. 7D, and/or some or all of actions performed by the SMF in another process described in embodiments of this application.

According to another example to understand this application, a chip is provided, and the chip is applied to a transit device. The chip includes at least one processor and a communication interface, the communication interface is coupled to the at least one processor, and the processor is configured to run instructions to perform step 502 in FIG. 5, step 608 to step 610 in FIG. 6, step 711 to step 713 in FIG. 7B, and/or some or all of actions performed by the transit device in another process described in embodiments of this application.

According to still another example to understand this application, a chip is provided, and the chip is applied to a UPF. The chip includes at least one processor and a communication interface, the communication interface is coupled to the at least one processor, and the processor is configured to run instructions to perform step 605 to step 607 (in this case, the UPF is the UPF 1) in FIG. 6, step 702, step 706, and step 714 to step 716 (in this case, the UPF is the UPF 1) in FIG. 7A, FIG. 7C, and FIG. 7D, step 704, step 707, and step 714 to step 716 (in this case, the UPF is the UPF 2) in FIG. 7A to FIG. 7D, step 706 and step 714 to step 716 (in this case, the UPF is the UPF 3) in FIG. 7A, FIG. 7C, and FIG. 7D, and/or some or all of actions performed by the UPF in another process described in embodiments of this application.

All or some of the foregoing embodiments may be implemented by software, hardware, firmware, or any combination thereof. When a software program is used to implement embodiments, embodiments may be implemented entirely or partially in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, and microwave, or the like) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state disk (solid-state disk, SSD)), or the like.

Although this application is described with reference to embodiments, in a process of implementing this application that claims protection, a person skilled in the art may understand and implement another variation of the disclosed embodiments by viewing the accompanying drawings, disclosed content, and the accompanying claims. In the claims, "including" (comprising) does not exclude another component or another step, and "a" or "one" does not exclude a meaning of plurality. A single processor or another unit may implement several functions enumerated in the claims. Some measures are recorded in dependent claims that are different from each other, but this does not mean that these measures cannot be combined to produce a better effect.

## Claims

1. A communication method, comprising:
determining (501), by a session management network element in a process of creating a session for a terminal in a group, a transit device that provides a fifth generation virtual network, 5GVN, service for the group, wherein the transit device is configured to forward data between any two user plane network elements that provide the 5GVN service for the group; and
sending (502), by the session management network element, a first forwarding rule to the transit device, wherein the first forwarding rule comprises forwarding information of at least one user plane network element and forwarding information of at least one terminal in the group served by the at least one user plane network element, the first forwarding rule is used by the transit device to forward, to a first user plane network element that serves a first terminal in the group, a data packet whose destination address is an address of the first terminal in the group, and the first terminal in the group is any one of the at least one terminal in the group, the first user plane network element is any one of the at least one user plane network element;
wherein the method further comprises:
sending, by the session management network element, a second forwarding rule to the first user plane network element, wherein the second forwarding rule comprises forwarding information of the transit device, and the second forwarding rule is used by the first user plane network element to forward, to the transit device, a data packet whose destination address is not an address of a terminal served by the first user plane network element;
sending, by the session management network element, a fourth forwarding rule to the first user plane network element, wherein the fourth forwarding rule is used by the first user plane network element to forward a data packet whose destination address is an address of a terminal served by the first user plane network element to a radio access network, RAN, node accessed by the terminal served by the first user plane network element;
wherein a star topology architecture to reduce a quantity of tunnels is used in 5GVN networking.

2. The method according to claim 1, wherein the transit device is a user plane network element, and the first forwarding rule is an N4 rule.

3. The method according to claim 1 or 2, wherein the determining, by a session management network element, a transit device that provides a 5GVN service for the group comprises:
obtaining, by the session management network element from another network element, information about the transit device that provides the 5GVN service for the group; and
determining, by the session management network element, the transit device based on the obtained information about the transit device.

4. The method according to any one of claims 1 to 3, wherein the determining, by a session management network element in a process of creating a session for a terminal in a group, a transit device that provides a 5GVN service for the group comprises:
receiving, by the session management network element for a first time, a session establishment request sent by the terminal in the group, wherein the session establishment request is used to request to establish a session to access the 5GVN service; and
determining, by the session management network element, the transit device that provides the 5GVN service for the group.

5. The method according to claim 4, wherein if the session establishment request received by the session management network element for the first time is sent by a second terminal in the group, the method further comprises:
selecting, by the session management network element, a first user plane network element for a session of the second terminal, wherein if the transit device and the first user plane network element are two different devices, the first forwarding rule comprises forwarding information of the first user plane network element and forwarding information of the second terminal.

6. The method according to any one of claims 1 to 3, wherein the determining, by a session management network element in a process of creating a session for a terminal in a group, a transit device that provides a 5GVN service for the group comprises:
receiving, by the session management network element, a session establishment request sent by a third terminal in the group, wherein the session establishment request is used to request to establish a session to access the 5GVN service;
selecting, by the session management network element, a second user plane network element for a session of the third terminal;
determining, by the session management network element, whether a quantity of user plane network elements that provide the 5GVN service for the group reaches N, wherein N is an integer greater than 1; and
if the quantity reaches N, determining, by the session management network element, the transit device that provides the 5GVN service for the group.

7. The method according to claim 6, wherein the transit device is one of N user plane network elements that provide the 5GVN service for the group, the first forwarding rule comprises forwarding information of N-1 user plane network elements and forwarding information of terminals served by the N-1 user plane network elements, and the N-1 user plane network elements are user plane network elements other than the transit device in the N user plane network elements that provide the 5GVN service for the group.

8. The method according to claim 7, wherein the method further comprises:
sending, by the session management network element, an update request to the N-1 user plane network elements, wherein the update request is used to request a corresponding user plane network element to update a forwarding rule, and
an update request sent to a user plane network element comprises the second forwarding rule.

9. The method according to claim 6, wherein the transit device is a device other than N user plane network elements that provide the 5GVN service for the group, and the first forwarding rule comprises forwarding information of the N user plane network elements and forwarding information of terminals served by the N user plane network elements.

10. The method according to claim 9, wherein the method further comprises:
sending, by the session management network element, an update request to each of the N user plane network elements, wherein the update request is used to request a corresponding user plane network element to update a forwarding rule; and
an update request sent to a user plane network element comprises the second forwarding rule.

11. A communication apparatus, comprising means for carrying out the steps of any one of the claims 1 to 10.

12. A communication system, comprising a session management network element that provides a fifth generation virtual network 5GVN service for a group, a user plane network element that provides the 5GVN service for the group, and a transit device that provides the 5GVN service for the group, wherein
the session management network element is configured to: in a process of creating a session for a terminal in the group, send (608) a first forwarding rule to the transit device, send (605) a second forwarding rule to the user plane network element and send a fourth forwarding rule to the user plane network element, wherein the first forwarding rule is used by the transit device to forward, to the user plane network element, a data packet whose destination address is an address of the terminal served by the user plane network element, the second forwarding rule sent to the user plane network element is used by the user plane network element to forward, to the transit device, a data packet whose destination address is not an address of a terminal served by the user plane network element, and the fourth forwarding rule sent to the user plane network element is used by the user plane network element to forward a data packet whose destination address is an address of a terminal served by the user plane network element to a radio access network, RAN, node accessed by the terminal served by the user plane network element;
the transit device is configured to: receive (608) the first forwarding rule and install the first forwarding rule and to forward data between any two user plane network elements that provide the 5GVN service for the group; and
the user plane network element is configured to: receive (605) the second forwarding rule and install the second forwarding rule and the fourth forwarding rule;
wherein a star topology architecture to reduce a quantity of tunnels is used in 5GVN networking.

13. The system according to claim 12, wherein the transit device is determined (603) by the session management network element for the group when a quantity of user plane network elements that provide the 5GVN service for the group reaches N;
the session management network element is specifically configured to send (605) the second forwarding rule to the user plane network element after determining (603) the transit device for the group; and
the user plane network element is specifically configured to: receive (605) the second forwarding rule and update (606) a forwarding rule in the user plane network element to the second forwarding rule.

14. A computer-readable storage medium, wherein the computer-readable storage medium stores a computer program or instructions; and when the computer program or the instructions are run on a computer, the computer is enabled to perform the method according to any one of claims 1 to 10.

## Patentansprüche

1. Kommunikationsverfahren, umfassend:
Bestimmen (501), durch ein Sitzungsverwaltung-Netzwerkelement in einem Prozess des Erzeugens einer Sitzung für ein Endgerät in einer Gruppe, eines Übergangsgeräts, das einen Dienst eines virtuellen Netzwerks der fünften Generation bzw. 5GVN für die Gruppe bereitstellt, wobei das Übergangsgerät konfiguriert ist zum Weiterleiten von Daten zwischen zwei beliebigen Benutzerebenen-Netzwerkelementen, die den 5GVN-Dienst für die Gruppe bereitstellen; und
Senden (502), durch das Sitzungsverwaltung-Netzwerkelement, einer ersten Weiterleitungsregel an das Übergangsgerät, wobei die erste Weiterleitungsregel Weiterleitungsinformationen mindestens eines Benutzerebenen-Netzwerkelements und Weiterleitungsinformationen mindestens eines Endgeräts in der Gruppe, die durch das mindestens eine Benutzerebenen-Netzwerkelement versorgt wird, umfasst, die erste Weiterleitungsregel durch das Übergangsgerät zum Weiterleiten, an ein erstes Benutzerebenen-Netzwerkelement, das ein erstes Endgerät in der Gruppe versorgt, eines Datenpakets, dessen Bestimmungsadresse eine Adresse des ersten Endgeräts in der Gruppe ist, verwendet wird, und das erste Endgerät in der Gruppe ein beliebiges eines des mindestens einen Endgeräts in der Gruppe ist, das erste Benutzerebenen-Netzwerkelement ein beliebiges eines des mindestens einen Benutzerebenen-Netzwerkelements ist;
wobei das Verfahren ferner Folgendes umfasst:
Senden, durch das Sitzungsverwaltung-Netzwerkelement, einer zweiten Weiterleitungsregel an das erste Benutzerebenen-Netzwerkelement, wobei die zweite Weiterleitungsregel Weiterleitungsinformationen des Übergangsgeräts umfasst und die zweite Weiterleitungsregel durch das erste Benutzerebenen-Netzwerkelement zum Weiterleiten, an das Übergangsgerät, eines Datenpakets, dessen Bestimmungsadresse nicht eine Adresse eines Endgeräts ist, das durch das erste Benutzerebenen-Netzwerkelement versorgt wird, verwendet wird;
Senden, durch das Sitzungsverwaltung-Netzwerkelement, einer vierten Weiterleitungsregel an das erste Benutzerebenen-Netzwerkelement, wobei die vierte Weiterleitungsregel durch das erste Benutzerebenen-Netzwerkelement zum Weiterleiten eines Datenpakets, dessen Bestimmungsadresse eine Adresse eines Endgerät ist, das durch das erste Benutzerebenen-Netzwerkelement versorgt wird, an einen Funkzugangsnetzwerk- bzw. RAN-Knoten, auf den durch das Endgerät, das durch das erste Benutzerebenen-Netzwerkelement versorgt wird, zugegriffen wird, verwendet wird;
wobei eine Sterntopologiearchitektur zum Reduzieren einer Anzahl von Tunneln bei der 5GVN-Vernetzung verwendet wird.

2. Verfahren nach Anspruch 1, wobei das Übergangsgerät ein Benutzerebenen-Netzwerkelement ist und die erste Weiterleitungsregel eine N4-Regel ist.

3. Verfahren nach Anspruch 1 oder 2, wobei das Bestimmen, durch ein Sitzungsverwaltung-Netzwerkelement, eines Übergangsgeräts, das einen 5GVN-Dienst für die Gruppe bereitstellt, Folgendes umfasst:
Erlangen, durch das Sitzungsverwaltung-Netzwerkelement von einem anderen Netzwerkelement, von Informationen über das Übergangsgerät, das den 5GVN-Dienst für die Gruppe bereitstellt; und
Bestimmen, durch das Sitzungsverwaltung-Netzwerkelement, des Übergangsgeräts basierend auf den erlangten Informationen über das Übergangsgerät.

4. Verfahren nach einem der Ansprüche 1 bis 3, wobei das Bestimmen, durch ein Sitzungsverwaltung-Netzwerkelement in einem Prozess des Erzeugens einer Sitzung für ein Endgerät in einer Gruppe, eines Übergangsgeräts, das einen 5GVN-Dienst für die Gruppe bereitstellt, Folgendes umfasst:
Empfangen, durch das Sitzungsverwaltung-Netzwerkelement für eine erste Zeit, einer durch das Endgerät in der Gruppe gesandten Sitzungseinrichtungsanforderung, wobei die Sitzungseinrichtungsanforderung verwendet wird, die Einrichtung einer Sitzung zum Zugreifen auf den 5GVN-Dienst anzufordern; und
Bestimmen, durch das Sitzungsverwaltung-Netzwerkelement, des Übergangsgeräts, das den 5GVN-Dienst für die Gruppe bereitstellt.

5. Verfahren nach Anspruch 4, wobei, wenn die durch das Sitzungsverwaltung-Netzwerkelement für die erste Zeit empfangene Sitzungseinrichtungsanforderung durch ein zweites Endgerät in der Gruppe gesandt wird, das Verfahren ferner Folgendes umfasst:
Auswählen, durch das Sitzungsverwaltung-Netzwerkelement, eines ersten Benutzerebenen-Netzwerkelements für eine Sitzung des zweiten Endgeräts, wobei, wenn das Übergangsgerät und das erste Benutzerebenen-Netzwerkelement zwei verschiedene Geräte sind, die erste Weiterleitungsregel Weiterleitungsinformationen des ersten Benutzerebenen-Netzwerkelements und Weiterleitungsinformationen des zweiten Endgeräts umfasst.

6. Verfahren nach einem der Ansprüche 1 bis 3, wobei das Bestimmen, durch ein Sitzungsverwaltung-Netzwerkelement in einem Prozess des Erzeugens einer Sitzung für ein Endgerät in einer Gruppe, eines Übergangsgeräts, das einen 5GVN-Dienst für die Gruppe bereitstellt, Folgendes umfasst:
Empfangen, durch das Sitzungsverwaltung-Netzwerkelement, einer durch ein drittes Endgerät in der Gruppe gesandten Sitzungseinrichtungsanforderung, wobei die Sitzungseinrichtungsanforderung verwendet wird, die Einrichtung einer Sitzung zum Zugreifen auf den 5GVN-Dienst anzufordern;
Auswählen, durch das Sitzungsverwaltung-Netzwerkelement, eines zweiten Benutzerebenen-Netzwerkelements für eine Sitzung des dritten Endgeräts;
Bestimmen, durch das Sitzungsverwaltung-Netzwerkelement, ob eine Anzahl von Benutzerebenen-Netzwerkelementen, die den 5GVN-Dienst für die Gruppe bereitstellen, N erreicht, wobei N eine ganze Zahl größer als 1 ist; und
wenn die Anzahl N erreicht, Bestimmen, durch das Sitzungsverwaltung-Netzwerkelement, des Übergangsgeräts, das den 5GVN-Dienst für die Gruppe bereitstellt.

7. Verfahren nach Anspruch 6, wobei das Übergangsgerät eines von N Benutzerebenen-Netzwerkelementen ist, die den 5GVN-Dienst für die Gruppe bereitstellen, die erste Weiterleitungsregel Weiterleitungsinformationen von N-1 Benutzerebenen-Netzwerkelementen und Weiterleitungsinformationen von Endgeräten, die durch die N-1 Benutzerebenen-Netzwerkelemente versorgt werden, umfasst, und die N-1 Benutzerebenen-Netzwerkelemente andere Benutzerebenen-Netzwerkelemente als das Übergangsgerät in den N Benutzerebenen-Netzwerkelementen, die den 5GVN-Dienst für die Gruppe bereitstellen, sind.

8. Verfahren nach Anspruch 7, wobei das Verfahren ferner Folgendes umfasst:
Senden, durch das Sitzungsverwaltung-Netzwerkelement, einer Aktualisierungsanforderung an die N-1 Benutzerebenen-Netzwerkelemente, wobei die Aktualisierungsanforderung verwendet wird, ein korrespondierendes Benutzerebenen-Netzwerkelement zum Aktualisieren einer Weiterleitungsregel anzufordern, und
eine an ein Benutzerebenen-Netzwerkelement gesandte Aktualisierungsanforderung die zweite Weiterleitungsregel umfasst.

9. Verfahren nach Anspruch 6, wobei das Übergangsgerät ein anderes Gerät als N Benutzerebenen-Netzwerkelemente, die den 5GVN-Dienst für die Gruppe bereitstellen, ist und die erste Weiterleitungsregel Weiterleitungsinformationen der N Benutzerebenen-Netzwerkelemente und Weiterleitungsinformationen von Endgeräten, die durch die N Benutzerebenen-Netzwerkelemente versorgt werden, umfasst.

10. Verfahren nach Anspruch 9, wobei das Verfahren ferner umfasst:
Senden, durch das Sitzungsverwaltung-Netzwerkelement, einer Aktualisierungsanforderung an jedes der N Benutzerebenen-Netzwerkelemente, wobei die Aktualisierungsanforderung verwendet wird, ein korrespondierendes Benutzerebenen-Netzwerkelement zum Aktualisieren einer Weiterleitungsregel anzufordern; und
eine an ein Benutzerebenen-Netzwerkelement gesandte Aktualisierungsanforderung die zweite Weiterleitungsregel umfasst.

11. Kommunikationsvorrichtung, umfassend Mittel zum Ausführen der Schritte eines beliebigen eines der Ansprüche 1 bis 10.

12. Kommunikationssystem, umfassend ein Sitzungsverwaltung-Netzwerkelement, das einen Dienst eines virtuellen Netzwerks der fünften Generation bzw. 5GVN für eine Gruppe bereitstellt, ein Benutzerebenen-Netzwerkelement, das den 5GVN-Dienst für die Gruppe bereitstellt, und ein Übergangsgerät, das den 5GVN-Dienst für die Gruppe bereitstellt, wobei
das Sitzungsverwaltung-Netzwerkelement konfiguriert ist zum: in einem Prozess des Erzeugens einer Sitzung für ein Endgerät in der Gruppe Senden (608) einer ersten Weiterleitungsregel an das Übergangsgerät, Senden (605) einer zweiten Weiterleitungsregel an das Benutzerebenen-Netzwerkelement und Senden einer vierten Weiterleitungsregel an das Benutzerebenen-Netzwerkelement, wobei die erste Weiterleitungsregel durch das Übergangsgerät zum Weiterleiten, an das Benutzerebenen-Netzwerkelement, eines Datenpakets, dessen Bestimmungsadresse eine Adresse des Endgeräts ist, das durch das Benutzerebenen-Netzwerkelement versorgt wird, verwendet wird, die an das Benutzerebenen-Netzwerkelement gesandte zweite Weiterleitungsregel durch das Benutzerebenen-Netzwerkelement zum Weiterleiten, an das Übergangsgerät, eines Datenpakets, dessen Bestimmungsadresse nicht eine Adresse eines Endgeräts ist, das durch das Benutzerebenen-Netzwerkelement versorgt wird, verwendet wird und die an das Benutzerebenen-Netzwerkelement gesandte vierte Weiterleitungsregel durch das Benutzerebenen-Netzwerkelement zum Weiterleiten eines Datenpakets, dessen Bestimmungsadresse eine Adresse eines Endgeräts ist, das durch das Benutzerebenen-Netzwerkelement versorgt wird, an einen Funkzugangsnetzwerk- bzw. RAN-Knoten, auf den durch das Endgerät, das durch die Benutzerebenen-Netzwerkelement versorgt wird, zugegriffen wird, verwendet wird;
das Übergangsgerät konfiguriert ist zum: Empfangen (608) der ersten Weiterleitungsregel und Installieren der ersten Weiterleitungsregel und zum Weiterleiten von Daten zwischen zwei beliebigen Benutzerebenen-Netzwerkelementen, die den 5GVN-Dienst für die Gruppe bereitstellen; und
das Benutzerebenen-Netzwerkelement konfiguriert ist zum: Empfangen (605) der zweiten Weiterleitungsregel und Installieren der zweiten Weiterleitungsregel und der vierten Weiterleitungsregel;
wobei eine Sterntopologiearchitektur zum Reduzieren einer Anzahl von Tunneln bei der 5GVN-Vernetzung verwendet wird.

13. System nach Anspruch 12, wobei das Übergangsgerät durch das Sitzungsverwaltung-Netzwerkelement für die Gruppe bestimmt wird (603), wenn eine Anzahl von Benutzerebenen-Netzwerkelementen, die den 5GVN-Dienst für die Gruppe bereitstellen, N erreicht;
das Sitzungsverwaltung-Netzwerkelement spezifisch konfiguriert ist zum Senden (605) der zweiten Weiterleitungsregel an das Benutzerebenen-Netzwerkelement nach dem Bestimmen (603) des Übergangsgeräts für die Gruppe; und
das Benutzerebenen-Netzwerkelement spezifisch konfiguriert ist zum: Empfangen (605) der zweiten Weiterleitungsregel und Aktualisieren (606) einer Weiterleitungsregel in dem Benutzerebenen-Netzwerkelement auf die zweite Weiterleitungsregel.

14. Computerlesbares Speichermedium, wobei das computerlesbare Speichermedium ein Computerprogramm oder Anweisungen speichert; und wenn das Computerprogramm oder die Anweisungen auf einem Computer ausgeführt werden, der Computer in die Lage versetzt wird, das Verfahren nach einem der Ansprüche 1 bis 10 durchzuführen.

## Revendications

1. Procédé de communication, comprenant :
la détermination (501), par un élément de réseau de gestion de session dans un processus de création d'une session pour un terminal dans un groupe, d'un dispositif de transit qui fournit un service de réseau virtuel de cinquième génération, 5GVN, pour le groupe, le dispositif de transit étant configuré pour transférer des données entre deux éléments de réseau de plan utilisateur quelconques qui fournissent le service 5GVN pour le groupe ; et
l'envoi (502), par l'élément de réseau de gestion de session, d'une première règle de transfert au dispositif de transit, la première règle de transfert comprenant des informations de transfert d'au moins un élément de réseau de plan utilisateur et des informations de transfert d'au moins un terminal dans le groupe desservi par l'au moins un élément de réseau de plan utilisateur, la première règle de transfert étant utilisée par le dispositif de transit pour transférer, vers un premier élément de réseau de plan utilisateur qui dessert un premier terminal dans le groupe, un paquet de données dont l'adresse de destination est une adresse du premier terminal dans le groupe, et le premier terminal dans le groupe étant l'un quelconque de l'au moins un terminal dans le groupe, le premier élément de réseau de plan utilisateur étant l'un quelconque de l'au moins un élément de réseau de plan utilisateur ;
le procédé comprenant en outre :
l'envoi, par l'élément de réseau de gestion de session, d'une deuxième règle de transfert au premier élément de réseau de plan utilisateur, la deuxième règle de transfert comprenant des informations de transfert du dispositif de transit, et la deuxième règle de transfert étant utilisée par le premier élément de réseau de plan utilisateur pour transférer, vers le dispositif de transit, un paquet de données dont l'adresse de destination n'est pas une adresse d'un terminal desservi par le premier élément de réseau de plan utilisateur ;
l'envoi, par l'élément de réseau de gestion de session, d'une quatrième règle de transfert au premier élément de réseau de plan utilisateur, la quatrième règle de transfert étant utilisée par le premier élément de réseau de plan utilisateur pour transférer un paquet de données dont l'adresse de destination est une adresse d'un terminal desservi par le premier élément de réseau de plan utilisateur vers un nœud de réseau d'accès radio, RAN, auquel accède le terminal desservi par le premier élément de réseau de plan utilisateur ;
une architecture de topologie en étoile pour réduire une quantité de tunnels étant utilisée dans la mise en réseau 5GVN.

2. Procédé selon la revendication 1, le dispositif de transit étant un élément de réseau de plan utilisateur, et la première règle de transfert étant une règle N4.

3. Procédé selon la revendication 1 ou 2, la détermination, par un élément de réseau de gestion de session, d'un dispositif de transit qui fournit un service 5GVN pour le groupe comprenant :
l'obtention, par l'élément de réseau de gestion de session auprès d'un autre élément de réseau, d'informations concernant le dispositif de transit qui fournit le service 5GVN pour le groupe ; et
la détermination, par l'élément de réseau de gestion de session, du dispositif de transit sur la base des informations obtenues concernant le dispositif de transit.

4. Procédé selon l'une quelconque des revendications 1 à 3, la détermination, par un élément de réseau de gestion de session dans un processus de création d'une session pour un terminal dans un groupe, d'un dispositif de transit qui fournit un service 5GVN pour le groupe comprenant :
la réception, par l'élément de réseau de gestion de session pour une première fois, d'une requête d'établissement de session envoyée par le terminal dans le groupe, la requête d'établissement de session étant utilisée pour demander l'établissement d'une session pour accéder au service 5GVN ; et
la détermination, par l'élément de réseau de gestion de session, du dispositif de transit qui fournit le service 5GVN pour le groupe.

5. Procédé selon la revendication 4, si la requête d'établissement de session reçue par l'élément de réseau de gestion de session pour la première fois est envoyée par un second terminal dans le groupe, le procédé comprenant en outre :
la sélection, par l'élément de réseau de gestion de session, d'un premier élément de réseau de plan utilisateur pour une session du second terminal, si le dispositif de transit et le premier élément de réseau de plan utilisateur sont deux dispositifs différents, la première règle de transfert comprenant des informations de transfert du premier élément de réseau de plan utilisateur et des informations de transfert du second terminal.

6. Procédé selon l'une quelconque des revendications 1 à 3, la détermination, par un élément de réseau de gestion de session dans un processus de création d'une session pour un terminal dans un groupe, d'un dispositif de transit qui fournit un service 5GVN pour le groupe comprenant :
la réception, par l'élément de réseau de gestion de session, d'une requête d'établissement de session envoyée par un troisième terminal dans le groupe, la requête d'établissement de session étant utilisée pour demander l'établissement d'une session pour accéder au service 5GVN ;
la sélection, par l'élément de réseau de gestion de session, d'un second élément de réseau de plan utilisateur pour une session du troisième terminal ;
la détermination, par l'élément de réseau de gestion de session, si une quantité d'éléments de réseau de plan utilisateur qui fournissent le service 5GVN pour le groupe atteint N, N étant un entier supérieur à 1 ; et
si la quantité atteint N, la détermination, par l'élément de réseau de gestion de session, du dispositif de transit qui fournit le service 5GVN pour le groupe.

7. Procédé selon la revendication 6, le dispositif de transit étant l'un des N éléments de réseau de plan utilisateur qui fournissent le service 5GVN pour le groupe, la première règle de transfert comprenant des informations de transfert de N-1 éléments de réseau de plan utilisateur et des informations de transfert des terminaux desservis par les N-1 éléments de réseau de plan utilisateur, et les N-1 éléments de réseau de plan utilisateur étant des éléments de réseau de plan utilisateur autres que le dispositif de transit parmi les N éléments de réseau de plan utilisateur qui fournissent le service 5GVN pour le groupe.

8. Procédé selon la revendication 7, le procédé comprenant en outre :
l'envoi, par l'élément de réseau de gestion de session, d'une requête de mise à jour aux N-1 éléments de réseau de plan utilisateur, la requête de mise à jour étant utilisée pour demander à un élément de réseau de plan utilisateur correspondant de mettre à jour une règle de transfert, et
une requête de mise à jour envoyée à un élément de réseau de plan utilisateur comprenant la deuxième règle de transfert.

9. Procédé selon la revendication 6, le dispositif de transit étant un dispositif autre que les N éléments de réseau de plan utilisateur qui fournissent le service 5GVN pour le groupe, et la première règle de transfert comprenant des informations de transfert des N éléments de réseau de plan utilisateur et des informations de transfert des terminaux desservis par les N éléments de réseau de plan utilisateur.

10. Procédé selon la revendication 9, le procédé comprenant en outre :
l'envoi, par l'élément de réseau de gestion de session, d'une requête de mise à jour à chacun des N éléments de réseau de plan utilisateur, la requête de mise à jour étant utilisée pour demander à un élément de réseau de plan utilisateur correspondant de mettre à jour une règle de transfert ; et
une requête de mise à jour envoyée à un élément de réseau de plan utilisateur comprenant la deuxième règle de transfert.

11. Appareil de communication, comprenant des moyens pour mettre en œuvre les étapes selon l'une quelconque des revendications 1 à 10.

12. Système de communication, comprenant un élément de réseau de gestion de session qui fournit un service de réseau virtuel de cinquième génération, 5GVN, pour un groupe, un élément de réseau de plan utilisateur qui fournit le service 5GVN pour le groupe, et un dispositif de transit qui fournit le service 5GVN pour le groupe,
l'élément de réseau de gestion de session étant configuré pour : dans un processus de création d'une session pour un terminal dans le groupe, envoyer (608) une première règle de transfert au dispositif de transit, envoyer (605) une deuxième règle de transfert à l'élément de réseau de plan utilisateur et envoyer une quatrième règle de transfert à l'élément de réseau de plan utilisateur, la première règle de transfert étant utilisée par le dispositif de transit pour transférer, vers l'élément de réseau de plan utilisateur, un paquet de données dont l'adresse de destination est une adresse du terminal desservi par l'élément de réseau de plan utilisateur, la deuxième règle de transfert envoyée à l'élément de réseau de plan utilisateur étant utilisée par l'élément de réseau de plan utilisateur pour transférer, vers le dispositif de transit, un paquet de données dont l'adresse de destination n'est pas une adresse d'un terminal desservi par l'élément de réseau de plan utilisateur, et la quatrième règle de transfert envoyée à l'élément de réseau de plan utilisateur étant utilisée par l'élément de réseau de plan utilisateur pour transférer un paquet de données dont l'adresse de destination est une adresse d'un terminal desservi par l'élément de réseau de plan utilisateur vers un nœud de réseau d'accès radio, RAN, auquel accède le terminal desservi par l'élément de réseau de plan utilisateur ;
le dispositif de transit étant configuré pour : recevoir (608) la première règle de transfert et installer la première règle de transfert et pour transférer des données entre deux éléments de réseau de plan utilisateur quelconques qui fournissent le service 5GVN pour le groupe ; et
l'élément de réseau de plan utilisateur étant configuré pour : recevoir (605) la deuxième règle de transfert et installer la deuxième règle de transfert et la quatrième règle de transfert ;
une architecture de topologie en étoile pour réduire une quantité de tunnels étant utilisée dans la mise en réseau 5GVN.

13. Système selon la revendication 12, le dispositif de transit étant déterminé (603) par l'élément de réseau de gestion de session pour le groupe lorsqu'une quantité d'éléments de réseau de plan utilisateur qui fournissent le service 5GVN pour le groupe atteint N ;
l'élément de réseau de gestion de session étant spécifiquement configuré pour envoyer (605) la deuxième règle de transfert à l'élément de réseau de plan utilisateur après la détermination (603) du dispositif de transit pour le groupe ; et
l'élément de réseau de plan utilisateur étant spécifiquement configuré pour : recevoir (605) la deuxième règle de transfert et mettre à jour (606) une règle de transfert dans l'élément de réseau de plan utilisateur avec la deuxième règle de transfert.

14. Support de stockage lisible par ordinateur, le support de stockage lisible par ordinateur stockant un programme informatique ou des instructions ; et lors de l'exécution du programme informatique ou des instructions sur un ordinateur, l'ordinateur étant activé pour réaliser le procédé selon l'une quelconque des revendications 1 à 10.
